# EUROPÄISCHE PATENTANMELDUNG

(11) **EP 4 134 153 A1**
(43) Veröffentlichungstag der Anmeldung: **15.02.2023**
(21) Anmeldenummer: 21190973.4
(22) Anmeldetag: 12.08.2021
(51) Int. Cl.: B01D 53/26, B01D 53/30, C01B 3/56, F25J 3/06, F25B 47/02, C01B 3/50

(54) **VERFAHREN ZUR TROCKNUNG EINES WASSERSTOFF-WASSERDAMPF-GEMISCHES UND WASSERSTOFFTROCKNUNGSVORRICHTUNG**

(71) Anmelder: FRONIUS INTERNATIONAL GmbH, 4643 Pettenbach (AT)
(72) Erfinder: KEUSCHNIGG, Richard, 4643 Pettenbach (AT); FINK, Reinhold, 4643 Pettenbach (AT)
(74) Vertreter: SONN Patentanwälte OG

(57) **Zusammenfassung**

Verfahren zur Trocknung eines Wasserstoff-Wasserdampf-Gemisches mit zumindest den folgenden Schritten:
c) Zuleiten eines Wasserstoff-Wasserdampf-Gemisches zu einem ersten Wärmetauscher (3), wobei ein Kältefluid mit einer Temperatur von kleiner oder gleich 0°C zum ersten Wärmetauscher (3) zugeleitet wird, zur Abscheidung von Wasserdampf aus dem Wasserstoff-Wasserdampf-Gemisch; und Austragen des Wasserstoff-Wasserdampf-Gemisches aus dem ersten Wärmetauscher (3);
d) Zuleiten des Wasserstoff-Wasserdampf-Gemisches zum ersten Wärmetauscher (3), wobei die Zuleitung des Kältefluids zum ersten Wärmetauscher (3) reduziert oder unterbrochen wird, zum Regenerieren des ersten Wärmetauschers (3), insbesondere zum Abtauen von Schnee und/oder Eis im ersten Wärmetauscher (3); und Austragen des Wasserstoff-Wasserdampf-Gemisches aus dem ersten Wärmetauscher (3) und Zuleiten des aus dem ersten Wärmetauscher (3) ausgetragenen Wasserstoff-Wasserdampf-Gemisches zu einem zweiten Wärmetauscher (4), wobei das Kältefluid mit einer Temperatur von kleiner oder gleich 0°C zum zweiten Wärmetauscher (4) zugeleitet wird, zur Abscheidung von Wasserdampf aus dem Wasserstoff-Wasserdampf-Gemisch; und Austragen des Wasserstoff-Wasserdampf-Gemisches aus dem zweiten Wärmetauscher (4). Weiters eine entsprechende Wasserstofftrocknungsvorrichtung (1).

## Beschreibung

Die Erfindung betrifft ein Verfahren zur Trocknung eines Wasserstoff-Wasserdampf-Gemisches und eine Wasserstofftrocknungsvorrichtung.

Bei der Erzeugung von Wasserstoff (H₂) tritt häufig das Problem auf, dass nicht Wasserstoff ausreichender Reinheit erzeugt wird, sondern ein Wasserstoff-Wasserdampf-Gemisch mit einem Wasserdampfanteil (H₂O), der so hoch ist, dass die weitere Verwendung des Wasserstoffs durch diesen behindert werden kann. Dies ist insbesondere bei der Erzeugung von Wasserstoff durch Elektrolyse eines Wasser enthaltenden Ausgangsstoffs, bei der Wasser in Wasserstoff und Sauerstoff gespalten wird, der Fall. Ein häufig verwendetes Elektrolyseverfahren ist die Protonen-Austausch-Membran- bzw. Polymer-Elektrolyt-Membran-(PEM)-Elektrolyse. Der (absolute) Wasserdampfanteil in dem Wasserstoff-Wasserdampf-Gemisch ist dabei üblicherweise umso höher, je höher die Betriebs- bzw. Gastemperatur ist. Zur Speicherung und Lagerung, aber auch zur Weiterverwendung von Wasserstoff muss dieser auf einen bestimmten Taupunkt getrocknet werden. Daher ist es notwendig, das Wasserstoff-Wasserdampf-Gemisch enthaltend den Wasserdampfanteil zu trocknen.

Zur Gastrocknung sind beispielsweise die Druckwechsel-Adsorption (Pressure Swing Adsorption, PSA) und die Temperaturwechsel-Adsorption (Temperature Swing Adsorption, TSA) bekannt. Ein Verfahren der PSA wird zum Beispiel in der EP 3 185 987 B1 und ein kombiniertes Verfahren aus PSA und TSA in der US 2019/0275460 A1 beschrieben. Weiters zeigt die WO 2014/016057 A1 eine Trocknungseinheit mit einem mehrkreisigen Wärmetauscher, wobei ein Kreis zur Kühlung des erzeugten Wasserstoffs und ein Kreis zur Kühlung des erzeugten Sauerstoffs vorgesehen sind, die beide einen gemeinsamen Kältekreis aufweisen. Diese Systeme weisen jedoch Regenerationsströme von bis zu 10% des ursprünglich erzeugten Wasserstoffs auf (insbesondere aufgrund des notwendigen Betriebs in Gegenrichtung zur Regeneration) und/oder sind sehr ineffizient.

Die EP 2 377 972 A1 zeigt eine Wasserabscheideeinrichtung für mit Wasserdampf angereicherten Wasserstoff. Die Wasserabscheideeinrichtung weist eine erste thermische Abscheidestufe und eine der ersten thermischen Abscheidestufe nachgeschaltete zweite thermische Abscheidestufe auf. In der ersten thermischen Abscheidestufe wird der Wasserstoffstrom auf eine Temperatur von etwa 4°C heruntergekühlt. Das aus der ersten thermischen Abscheidestufe austretende Gas wird der zweiten thermischen Abscheidestufe zugeführt. In dieser zweiten thermischen Abscheidestufe wird der Wasserstoff mit dem darin noch geführten Restwasser auf -36°C heruntergekühlt.

Hierbei wird somit insbesondere der unterschiedliche Kondensationspunkt bzw. Sublimationspunkt von Wasserstoff und Wasser ausgenützt und durch die Absonderung des Wasserdampfs aus dem Wasserstoff-Wasserdampf-Gemisch der Taupunkt des Wasserstoff-Wasserdampf-Gemisch gesenkt. Durch das Vorsehen eines Kältefluids mit einer Temperatur kleiner oder gleich 0°C kann der Wasserdampfanteil besonders stark gesenkt werden. Gleichzeitig geht hierbei kein (oder praktisch kein) Wasserstoff verloren, da dieser nicht kondensiert bzw. resublimiert. Andererseits kann mit diesem Prozess eine hohe Effizienz bzw. ein besserer Wirkungsgrad erreicht werden, da kein alternierender Temperatur- oder Druckwechsel erforderlich ist und die Temperatur des Wasserstoff-Wasserdampf-Gemisch zur Speicherung nach der Herstellung üblicherweise ohnehin abgesenkt werden muss.

In dem Temperaturbereich der zweiten Abscheidestufe in EP 2 377 972 A1 wird das im Wasserstoff mitgeführte Wasser in Form von Eis auskristallisiert, typischerweise an den Wärmeüberträgerwänden. Diese müssen daher von Zeit zu Zeit von Eis befreit werden. Das Abtauen erfolgt mit einer elektrischen Heizung. Außerdem kann die zweite thermische Abscheidestufe zwei Behälter aufweisen und abwechselnd betrieben werden, d.h. ein Behälter dient zur weiteren Kühlung des von der ersten thermischen Abscheidestufe erhaltenen Wasserstoffs, während der andere Behälter abgetaut wird.

Nachteiligerweise muss somit jedoch Energie für die elektrische Heizung zum Abtauen aufgewandt werden. Außerdem muss Energie zur Vorkühlung des Wasserstoffs in der ersten thermischen Abscheidestufe aufgewandt werden. Darüber hinaus weist das System eine große Komplexität auf, da zum Dauerbetrieb zusätzlich zum Behälter der ersten thermischen Abscheidestufe zwei Behälter für die zweite thermische Abscheidestufe notwendig sind. Mit nur zwei Behältern insgesamt ist kein Dauerbetrieb möglich.

Es ist eine Aufgabe der Erfindung, zumindest einen der Nachteile des Stands der Technik zu lindern oder zu beheben. Insbesondere ist es eine Aufgabe der Erfindung, ein einfacheres und energiesparendes System zur Wasserstofftrocknung bereitzustellen.

Dies wird erzielt durch ein Verfahren zur Trocknung eines Wasserstoff-Wasserdampf-Gemisches mit zumindest den folgenden Schritten:
a) Vorsehen eines Wasserstoff-Wasserdampf-Gemisches mit einem Wasserdampfanteil;
b) Vorsehen eines ersten Wärmetauschers und eines zweiten Wärmetauschers jeweils zur Wärmeübertragung zwischen dem Wasserstoff-Wasserdampf-Gemisch und einem Kältefluid;
c) Zuleiten des Wasserstoff-Wasserdampf-Gemisches zum ersten Wärmetauscher, wobei das Kältefluid mit einer Temperatur von kleiner oder gleich 0°C zum ersten Wärmetauscher zugeleitet wird, zur Abscheidung von Wasserdampf aus dem Wasserstoff-Wasserdampf-Gemisch; und Austragen des Wasserstoff-Wasserdampf-Gemisches aus dem ersten Wärmetauscher;
d) Zuleiten des Wasserstoff-Wasserdampf-Gemisches zum ersten Wärmetauscher, wobei die Zuleitung des Kältefluids zum ersten Wärmetauscher reduziert oder unterbrochen wird, zum Regenerieren des ersten Wärmetauschers, insbesondere zum Abtauen von Schnee und/oder Eis im ersten Wärmetauscher; und Austragen des Wasserstoff-Wasserdampf-Gemisches aus dem ersten Wärmetauscher und Zuleiten des aus dem ersten Wärmetauscher ausgetragenen Wasserstoff-Wasserdampf-Gemisches zum zweiten Wärmetauscher, wobei das Kältefluid mit einer Temperatur von kleiner oder gleich 0°C zum zweiten Wärmetauscher zugeleitet wird, zur Abscheidung von Wasserdampf aus dem Wasserstoff-Wasserdampf-Gemisch; und Austragen des Wasserstoff-Wasserdampf-Gemisches aus dem zweiten Wärmetauscher.

Weiters wird dies erzielt durch eine Wasserstofftrocknungsvorrichtung aufweisend:
- eine Zufuhr für ein Wasserstoff-Wasserdampf-Gemisch enthaltend einen Wasserdampfanteil;
- einen ersten Wärmetauscher zur Wärmeübertragung zwischen dem Wasserstoff-Wasserdampf-Gemisch und einem Kältefluid, mit einer Zuleitung für das Kältefluid und einer Ableitung für das Kältefluid;
- einen zweiten Wärmetauscher zur Wärmeübertragung zwischen dem Wasserstoff-Wasserdampf-Gemisch und dem Kältefluid, mit einer Zuleitung für das Kältefluid und einer Ableitung für das Kältefluid;
- eine Kühlvorrichtung, die dazu eingerichtet ist, das Kältefluid auf eine Temperatur von kleiner oder gleich 0°C, bevorzugt zwischen -40°C und -10°C, besonders bevorzugt zwischen - 30°C und -20°C, zu kühlen und die Zuleitung des ersten Wärmetauschers und die Zuleitung des zweiten Wärmetauschers mit dem Kältefluid zur Abscheidung von Wasserdampf aus dem Wasserstoff-Wasserdampf-Gemisch im jeweiligen Wärmetauscher zu versorgen;
- eine Ventil- und Leitungsanordnung, die dazu eingerichtet ist:
   - in einem Abscheidebetrieb des ersten Wärmetauschers und einem Regenerationsbetrieb des zweiten Wärmetauschers das Wasserstoff-Wasserdampf-Gemisch von der Zufuhr dem zweiten Wärmetauscher zuzuleiten und vom zweiten Wärmetauscher dem ersten Wärmetauscher zuzuleiten und
   - in einem Regenerationsbetrieb des ersten Wärmetauschers und einem Abscheidebetrieb des zweiten Wärmetauschers das Wasserstoff-Wasserdampf-Gemisch von der Zufuhr dem ersten Wärmetauscher zuzuleiten und vom ersten Wärmetauscher dem zweiten Wärmetauscher zuzuleiten.

Im ersten Wärmetauscher wird das Wasserstoff-Wasserdampf-Gemisch effizient durch Zuleiten des Kältefluids zum ersten Wärmetauscher mit einer Temperatur von kleiner oder gleich 0°C getrocknet. Hierbei werden insbesondere der unterschiedliche Kondensationspunkt bzw. Sublimationspunkt von Wasserstoff und Wasser ausgenützt und durch die Absonderung des Wasserdampfs aus dem Wasserstoff-Wasserdampf-Gemisch der Taupunkt des Wasserstoff-Wasserdampf-Gemisches gesenkt. Durch das Vorsehen eines Kältefluids mit einer Temperatur kleiner oder gleich 0°C kann der Wasserdampfanteil besonders stark gesenkt werden. Gleichzeitig geht hierbei kein (oder praktisch kein) Wasserstoff verloren, da dieser nicht kondensiert bzw. resublimiert. Es ist kein alternierender Temperatur- oder Druckwechsel erforderlich. Zum Regenerieren des ersten Wärmetauschers wird die Zuleitung des Kältefluids zum ersten Wärmetauscher unterbrochen oder reduziert. Somit wird das dem ersten Wärmetauscher zugeleitete Wasserstoff-Wasserdampf-Gemisch genützt, um den ersten Wärmetauscher zu regenerieren, insbesondere um Schnee und/oder Eis, der/das sich während der Trocknung des Wasserstoff-Wasserdampf-Gemisches im ersten Wärmetauscher abgesetzt hat, im ersten Wärmetauscher abzutauen. Vorteilhaft ist dabei, dass das Wasserstoff-Wasserdampf-Gemisch nach dessen Herstellung üblicherweise eine Temperatur von 20°C oder mehr aufweist. Die Regenerierung erfolgt somit, ohne dass zusätzliche Energie zum Abtauen aufgewendet werden muss. Gleichzeitig erfolgt bereits im ersten Wärmetauscher eine (Vor-)Kühlung des Wasserstoff-Wasserdampf-Gemisches, ohne dass Energie zur Kühlung aufgewandt werden muss, wobei bereits ein Teil des Wasserdampfes im Wasserstoff-Wasserdampf-Gemisch auskondensiert. Somit muss bei der anschließenden Trocknung des Wasserstoff-Wasserdampf-Gemisches im zweiten Wärmetauscher weniger Energie aufgewandt werden und zu Beginn tritt weniger Eisbildung im zweiten Wärmetauscher auf, da das Wasserstoff-Wasserdampf-Gemisch bereits vorgekühlt (bspw. auf unter 0°C) ist.

Unter Trocknung des Wasserstoff-Wasserdampf-Gemisches wird verstanden, dass zumindest ein Teil des im Wasserstoff-Wasserdampf-Gemisch enthaltenen Wasserdampfes entfernt wird. Der Wasserdampfanteil im Wasserstoff-Wasserdampf-Gemisch kann auch vollständig entfernt werden. Die Temperatur des Wasserstoff-Wasserdampf-Gemischs beim Zuleiten zum ersten Wärmetauscher in Schritt c) und/oder Schritt d) beträgt bevorzugt weniger als 40°C, besonders bevorzugt zwischen 5°C und 30°C, noch mehr bevorzugt zwischen 10°C und 20°C. Der Taupunkt des Wasserstoff-Wasserdampf-Gemisches beim Zuleiten zum ersten Wärmetauscher in Schritt c) und/oder Schritt d) beträgt bevorzugt mehr als 5°C, besonders bevorzugt zwischen 10°C und 40°C, noch mehr bevorzugt zwischen 20°C und 30°C. Die Sättigung ϕ des Wasserstoff-Wasserdampf-Gemisches beim Zuleiten zum ersten Wärmetauscher in Schritt c) und/oder Schritt d) beträgt bevorzugt mehr als 0,8, besonders bevorzugt mehr als 0,9, noch mehr bevorzugt im Wesentlichen 1. Die Sättigung ϕ ist definiert als das Verhältnis von Dampfdruck zu Sättigungsdampfdruck. Das Kältefluid ist vorzugsweise ein Kältemittel oder ein Kühlmittel, insbesondere ein organisches oder anorganisches fluides Medium, beispielsweise ein Glykolgemisch oder Stickstoff. Das Kältefluid ist beim Zuleiten zum ersten Wärmetauscher in Schritt c) und/oder beim Zuleiten zum zweiten Wärmetauscher in Schritt d) vorzugsweise flüssig. Beim Austragen aus dem ersten Wärmetauscher in Schritt c) und/oder beim Austragen aus dem zweiten Wärmetauscher in Schritt d) ist das Kältefluid vorzugsweise gasförmig.

Der erste Wärmetauscher ist vorzugsweise ein 2-Rohrwärmetauscher, Rohrbündelwärmetauscher oder ein Plattenwärmetauscher. Der zweite Wärmetauscher ist vorzugsweise ein 2-Rohrwärmetauscher, Rohrbündelwärmetauscher oder ein Plattenwärmetauscher.

Das Verfahren zur Trocknung des Wasserstoff-Wasserdampf-Gemisches weist vorzugsweise weiters einen oder mehrere der folgenden Schritte auf:
Kühlen des Kältefluid auf eine Temperatur kleiner oder gleich 0°C, bevorzugt auf eine Temperatur zwischen -40°C und - 10°C, besonders bevorzugt zwischen -30°C und -20°C;
Zuleiten des Wasserstoff-Wasserdampf-Gemisches (insbesondere nach dem Austragen aus dem ersten Wärmetauscher in Schritt c) und/oder nach dem Austragen aus dem zweiten Wärmetauscher in Schritt d)) zu einem Speicher.

Die Temperatur des Wasserstoff-Wasserdampf-Gemisches beim Austragen aus dem ersten Wärmetauscher in Schritt c) und/oder beim Austragen aus dem zweiten Wärmetauscher in Schritt d) beträgt bevorzugt weniger als 0°C, besonders bevorzugt zwischen -10°C und -40°C, noch mehr bevorzugt zwischen -20°C und -30°C. Der Taupunkt des Wasserstoff-Wasserdampf-Gemisch beim Austragen aus dem ersten Wärmetauscher in Schritt c) und/oder beim Austragen aus dem zweiten Wärmetauscher in Schritt d) beträgt bevorzugt weniger als 0°C, besonders bevorzugt zwischen -10°C und -45°C, noch mehr bevorzugt zwischen -20°C und -30°C.

Die Wasserstofftrocknungsvorrichtung ist insbesondere dazu eingerichtet, das Verfahren zur Trocknung des Wasserstoff-Wasserdampf-Gemisches, zumindest in einer der hierin beschriebenen Varianten, durchzuführen. Insbesondere kann eine Kontrolleinheit vorgesehen sein, die dazu eingerichtet ist, die Wasserstofftrocknungsvorrichtung bzw. die anderen Komponenten der Wasserstofftrocknungsvorrichtung zur Durchführung des Verfahrens in einer der beschriebenen Varianten zu steuern.

In Schritt c) wird insbesondere ein Strom des Wasserstoff-Wasserdampf-Gemisches dem ersten Wärmetauscher zur Abscheidung von Wasserdampf zugeleitet. Dann wird auf Schritt d) umgeschaltet und (zeitlich von Schritt c) getrennt) ein Strom des Wasserstoff-Wasserdampf-Gemisches dem ersten Wärmetauscher zur Regenerierung des ersten Wärmetauschers zugeführt, wobei das ausgetragene Wasserstoff-Wasserdampf-Gemisch dem zweiten Wärmetauscher zur Abscheidung von Wasserdampf zugeführt wird. Vorzugsweise werden Schritt c) und Schritt d) hintereinander, insbesondere wiederholt abwechselnd, durchgeführt. Vorzugsweise wird wiederholt abwechselnd Schritt c) kontinuierlich durchgeführt und Schritt d) kontinuierlich durchgeführt.

In einer bevorzugten Variante des erfindungsgemäßen Verfahrens zur Trocknung des Wasserstoff-Wasserdampf-Gemisches hat das dem ersten Wärmetauscher in Schritt c) und/oder dem zweiten Wärmetauscher in Schritt d) zugeführte Kältefluid eine Temperatur zwischen -40°C und -10°C, bevorzugt zwischen -30°C und -20°C. Hierdurch kann ein besonders guter Wirkungsgrad erzielt werden. Insbesondere wird bei einer Temperatur des zugeführten Kältefluids kleiner oder gleich -10°C, insbesondere kleiner oder gleich -20°C, eine besonders gute Abscheidung von Wasserdampf erreicht. Andererseits ist eine Temperatur größer oder gleich -40°C für den Wirkungsgrad vorteilhaft, da eine niedrigere Temperatur nur eine gering verbesserte Abscheidung von Wasserstoffdampf bei gleichzeitiger starker Erhöhung des Energiebedarfs bedingt.

Schritt c) entspricht zumindest dem Abscheidebetrieb des ersten Wärmetauschers. Schritt d) entspricht dem Regenerationsbetrieb des ersten Wärmetauschers und dem Abscheidebetrieb des zweiten Wärmetauschers.

Die Ventil- und Leitungsanordnung weist vorzugsweise Leitungen zur Zufuhr, zum ersten Wärmetauscher und zum zweiten Wärmetauscher auf. Die Ventil- und Leitungsanordnung weist bevorzugt eine Ventilinsel auf, die mit der Zufuhr, dem ersten Wärmetauscher und dem zweiten Wärmetauscher verbunden ist. Vorzugsweise weist die Wasserstofftrocknungsvorrichtung eine Abfuhr (d.h. eine Ableitung) für das Wasserstoff-Wasserdampf-Gemisch auf. Bevorzugt ist die Abfuhr mit einem Speicher verbunden, vorzugsweise via eines Trockners, insbesondere einem Zeolithen. Vorzugsweise ist die Ventil- und Leitungsanordnung im Abscheidebetrieb des ersten Wärmetauschers und Regenerationsbetrieb des zweiten Wärmetauschers weiter dazu eingerichtet, das Wasserstoff-Wasserdampf-Gemisch vom ersten Wärmetauscher zur Abfuhr zu leiten und/oder im Abscheidebetrieb des zweiten Wärmetauschers und Regenerationsbetrieb des ersten Wärmetauschers weiter dazu eingerichtet, das Wasserstoff-Wasserdampf-Gemisch vom zweiten Wärmetauscher zur Abfuhr zu leiten.

Vorzugsweise weist der erste Wärmetauscher und der zweite Wärmetauscher jeweils einen Einlass für das Wasserstoff-Wasserdampf-Gemisch und einen Auslass für das Wasserstoff-Wasserdampf-Gemisch auf. Vorzugsweise weist die Ventil- und Leitungsanordnung zumindest eine Verbindungsleitung zwischen dem Einlass des ersten Wärmetauschers und dem Einlass des zweiten Wärmetauschers auf. Vorzugsweise weist die Ventil- und Leitungsanordnung eine Leitung von der Zufuhr zur Verbindungsleitung auf, wobei diese Leitung insbesondere ein Ventil aufweist. Vorzugsweise weist die Ventil- und Leitungsanordnung eine Leitung von der Zufuhr zum Auslass des ersten Wärmetauschers und eine Leitung von der Zufuhr zum Auslass des zweiten Wärmetauschers auf, wobei vorzugsweise diese beiden Leitungen jeweils ein Ventil aufweisen oder ein Drei-Wege-Ventil die Zufuhr mit diesen beiden Leitungen verbindet. Vorzugsweise weist die Ventil- und Leitungsanordnung eine Leitung vom Auslass des ersten Wärmetauschers zur Abfuhr und eine Leitung vom Auslass des zweiten Wärmetauschers zur Abfuhr auf, wobei vorzugsweise diese beiden Leitungen jeweils ein Ventil aufweisen oder ein Drei-Wege-Ventil die Abfuhr mit diesen beiden Leitungen verbindet. Vorzugsweise weist die Ventil- und Leitungsanordnung eine Ventilinsel auf, die mit der Zufuhr, der Abfuhr, dem Einlass des ersten Wärmetauschers, dem Auslass des ersten Wärmetauschers, dem Einlass des zweiten Wärmetauschers und dem Auslass des zweiten Wärmetauschers verbunden ist.

Es ist vorteilhaft, wenn Schritt c) weiter umfasst:
Zuleiten des Wasserstoff-Wasserdampf-Gemisches zum zweiten Wärmetauscher, wobei die Zuleitung des Kältefluids zum zweiten Wärmetauscher reduziert oder unterbrochen wird, zum Regenerieren des zweiten Wärmetauschers, insbesondere zum Abtauen von Schnee und/oder Eis im zweiten Wärmetauscher; und Austragen des Wasserstoff-Wasserdampf-Gemisches aus dem zweiten Wärmetauscher, wobei das aus dem zweiten Wärmetauscher ausgetragene Wasserstoff-Wasserdampf-Gemisch zum ersten Wärmetauscher zugeleitet wird. Auf diese Weise kann während des Trocknens im ersten Wärmetauscher der zweite Wärmetauscher regeneriert werden. Zusammenfassend weist Schritt c) somit auf:
Zuleiten des Wasserstoff-Wasserdampf-Gemisches zum zweiten Wärmetauscher, wobei die Zuleitung des Kältefluids zum zweiten Wärmetauscher reduziert oder unterbrochen wird, zum Regenerieren des zweiten Wärmetauschers, insbesondere zum Abtauen von Schnee und/oder Eis im zweiten Wärmetauscher; und Austragen des Wasserstoff-Wasserdampf-Gemisches aus dem zweiten Wärmetauscher und Zuleiten des aus dem zweiten Wärmetauscher ausgetragenen Wasserstoff-Wasserdampf-Gemisches zum ersten Wärmetauscher, wobei das Kältefluid mit einer Temperatur von kleiner oder gleich 0°C zum ersten Wärmetauscher zugeleitet wird, zur Abscheidung von Wasserdampf aus dem Wasserstoff-Wasserdampf-Gemisch; und Austragen des Wasserstoff-Wasserdampf-Gemisches aus dem ersten Wärmetauscher. In dieser Ausführungsform entspricht Schritt c) dem Abscheidebetrieb des ersten Wärmetauschers und dem Regenerationsbetrieb des zweiten Wärmetauschers.

Es ist vorteilhaft, wenn der erste Wärmetauscher einen Einlass für das Wasserstoff-Wasserdampf-Gemisch und einen Auslass für das Wasserstoff-Wasserdampf-Gemisch aufweist, und in Schritt c) das Wasserstoff-Wasserdampf-Gemisch über den Einlass dem ersten Wärmetauscher zugeleitet wird und über den Auslass aus dem ersten Wärmetauscher ausgetragen wird und in Schritt d) das Wasserstoff-Wasserdampf-Gemisch über den Auslass dem ersten Wärmetauscher zugeleitet wird und über den Einlass aus dem ersten Wärmetauscher ausgetragen wird, und wobei

vorzugsweise der zweite Wärmetauscher einen Einlass für das Wasserstoff-Wasserdampf-Gemisch und einen Auslass für das Wasserstoff-Wasserdampf-Gemisch aufweist, und in Schritt d) das Wasserstoff-Wasserdampf-Gemisch über den Einlass dem zweiten Wärmetauscher zugeleitet wird und über den Auslass aus dem zweiten Wärmetauscher ausgetragen wird und in Schritt c) das Wasserstoff-Wasserdampf-Gemisch über den Auslass dem zweiten Wärmetauscher zugeleitet wird und über den Einlass aus dem zweiten Wärmetauscher ausgetragen wird. Beim Abscheidebetrieb des jeweiligen Wärmetauschers wird das Wasserstoff-Wasserdampf-Gemisch dem jeweiligen Wärmetauscher über den Einlass zugeleitet und über den Auslass abgeleitet, wohingegen das Zu- und Ableiten beim Regenerationsbetrieb des jeweiligen Wärmetauschers umgekehrt erfolgt. Das Wasserstoff-Wasserdampf-Gemisch durchläuft den jeweiligen Wärmetauscher im Regenerationsbetrieb also in die entgegengesetzte Richtung wie im Abscheidebetrieb des jeweiligen Wärmetauschers. Vorzugsweise liegt der Einlass des ersten Wärmetauschers in der bestimmungsgemäßen Gebrauchsposition der Vorrichtung unterhalb des Auslasses des ersten Wärmetauschers. Vorzugsweise liegt der Einlass des zweiten Wärmetauschers in der bestimmungsgemäßen Gebrauchsposition der Vorrichtung unterhalb des Auslasses des zweiten Wärmetauschers. Vorzugsweise wird das Wasserstoff-Wasserdampf-Gemisch im ersten Wärmetauscher in Schritt d) abwärts (in Richtung der Schwerkraft) geführt (insbesondere zumindest in jenem Teil des ersten Wärmetauschers, in dem in Schritt c) mehr als 80% der Wasserabscheidung im ersten Wärmetauscher erfolgt). Vorzugsweise wird das Wasserstoff-Wasserdampf-Gemisch im zweiten Wärmetauscher in Schritt c) abwärts geführt (insbesondere zumindest in jenem Teil des zweiten Wärmetauschers, in dem in Schritt d) mehr als 80% der Wasserabscheidung im zweiten Wärmetauscher erfolgt). Vorteilhafterweise wird damit unterstützt, dass sich abgetautes Wasser mittels Schwerkraft nach unten absetzt. Für den Extremfall sehr hoher Strömungsgeschwindigkeiten des Wasserstoff-Wasserdampf-Gemisches wird außerdem verhindert, dass Wassertropfen nach oben (ab)geführt werden. Das Führen des Wasserstoff-Wasserdampf-Gemisches beim Regenerieren des jeweiligen Wärmetauschers im jeweiligen Wärmetauscher von oben nach unten begünstigt, dass sich das entstehende abtauende Wasser in die noch vorhandenen Eiskristalle einmischt, wodurch die Wärmeleitung erhöht wird (insbesondere, da Eis ein schlechter Wärmeleiter ist). Insbesondere wenn das Trocknen im jeweiligen Wärmetauscher nach dem Gegenstromprinzip erfolgt (also beim Trocknen das Kältefluid im Gegenstrom zum Wasserstoff-Wasserdampf-Gemisch geführt wird), weist das Wasserstoff-Wasserdampf-Gemisch beim Auslass die niedrigste Temperatur auf. Durch das Zuführen des Wasserstoff-Wasserdampf-Gemisches beim Regenieren des jeweiligen Wärmetauschers am Auslass, kann somit die effektivste Wärmeübertragung erzielt werden, da das wärmere Wasserstoff-Wasserdampf-Gemisch der kältesten Stelle im Wärmetauscher zugeführt wird.

Es ist vorteilhaft, wenn das Verfahren weiter den Schritt aufweist:
e) Zuleiten des Wasserstoff-Wasserdampf-Gemisches zum ersten Wärmetauscher, wobei das Kältefluid mit einer Temperatur von kleiner oder gleich 0°C zum ersten Wärmetauscher zugeleitet wird, zur Abscheidung von Wasserdampf aus dem Wasserstoff-Wasserdampf-Gemisch; und Austragen des Wasserstoff-Wasserdampf-Gemisches aus dem ersten Wärmetauscher; wobei das Wasserstoff-Wasserdampf-Gemisch vor dem Zuleiten des Wasserstoff-Wasserdampf-Gemisches zum ersten Wärmetauscher nicht den zweiten Wärmetauscher durchlaufen hat. Schritt e) kann insbesondere durchgeführt werden, wenn das Regenerieren des zweiten Wärmetauschers mit dem Wasserstoff-Wasserdampf-Gemisch nicht mehr notwendig oder nicht mehr effizient ist. In Schritt e) wird das Wasserstoff-Wasserdampf-Gemisch dem ersten Wärmetauscher insbesondere über den Einlass zugeleitet und über den Auslass vom ersten Wärmetauscher ausgetragen. Schritt e) entspricht einem reinen Abscheidebetrieb des ersten Wärmetauschers.

Es ist vorteilhaft, wenn das Verfahren weiter den Schritt aufweist:
f) Zuleiten des Wasserstoff-Wasserdampf-Gemisches zum zweiten Wärmetauscher, wobei das Kältefluid mit einer Temperatur von kleiner oder gleich 0°C zum zweiten Wärmetauscher zugeleitet wird, zur Abscheidung von Wasserdampf aus dem Wasserstoff-Wasserdampf-Gemisch; und Austragen des Wasserstoff-Wasserdampf-Gemisches aus dem zweiten Wärmetauscher; wobei das Wasserstoff-Wasserdampf-Gemisch vor dem Zuleiten des Wasserstoff-Wasserdampf-Gemisches zum zweiten Wärmetauscher nicht den ersten Wärmetauscher durchlaufen. Schritt f) kann insbesondere durchgeführt werden, wenn das Regenerieren des ersten Wärmetauschers mit dem Wasserstoff-Wasserdampf-Gemisch nicht mehr notwendig oder nicht mehr effizient ist. In Schritt f) wird das Wasserstoff-Wasserdampf-Gemisch dem zweiten Wärmetauscher insbesondere über den Einlass des zweiten Wärmetauschers zugeleitet und über den Auslass vom zweiten Wärmetauscher ausgetragen. Schritt f) entspricht einem reinen Abscheidebetrieb des zweiten Wärmetauschers.

Es ist bevorzugt, wenn die Schritte in der folgenden Reihenfolge durchgeführt werden: vorzugsweise Schritt e), Schritt d), vorzugsweise Schritt f), Schritt c). Vorzugsweise werden die Schritte in dieser Reihenfolge wiederholt durchgeführt, also vorzugsweise Schritt e), Schritt d), vorzugsweise Schritt f), Schritt c), vorzugsweise Schritt e), Schritt d), vorzugsweise Schritt f), Schritt c), usw. Somit wird eine effiziente kontinuierliche Wasserstofftrocknung erzielt. Insbesondere erfolgt in jedem Schritt eine kontinuierliche Zufuhr und Abfuhr des Wasserstoff-Wasserdampf-Gemisches.

Es ist bevorzugt, wenn in Schritt c) oder e) ein Taupunkt des Wasserstoff-Wasserdampf-Gemisches im ersten Wärmetauscher und/oder nach dem Austragen aus dem ersten Wärmetauscher gemessen wird und der Schritt d) oder f) durchgeführt wird basierend auf einer Feststellung, dass der gemessene Taupunkt einen vorbestimmten Taupunktgrenzwert übersteigt. Es ist bevorzugt, wenn in Schritt d) oder f) ein Taupunkt des Wasserstoff-Wasserdampf-Gemisches im zweiten Wärmetauscher und/oder nach dem Austragen aus dem zweiten Wärmetauscher gemessen wird und der Schritt c) oder e) durchgeführt wird basierend auf einer Feststellung, dass der gemessene Taupunkt einen vorbestimmten Grenzwert übersteigt. Wenn im Abscheidebetrieb des ersten Wärmetauschers (ggf. mit vorgeschaltetem Regenerationsbetrieb des zweiten Wärmetauschers) der Taupunkt des im ersten Wärmetauscher getrockneten Wasserstoff-Wasserdampf-Gemisch einen vorbestimmten Grenzwert übersteigt, wird also auf den Abscheidebetrieb im zweiten Wärmetauscher (ggf. mit vorgeschaltetem Regenerationsbetrieb des ersten Wärmetauschers) umgeschaltet, und umgekehrt. Der vorbestimmte Grenzwert des Taupunktes beträgt bevorzugt zwischen -30°C und - °10°C, besonders bevorzugt zwischen -20°C und -15°C.

Es ist vorteilhaft, wenn in Schritt d) eine Temperatur des Wasserstoff-Wasserdampf-Gemisches im ersten Wärmetauscher und/oder nach dem Austragen aus dem ersten Wärmetauscher gemessen wird und basierend auf einer Feststellung, dass die gemessene Temperatur einen vorbestimmten Temperaturgrenzwert übersteigt:
- ein Wasserauslassventil des ersten Wärmetauschers zum Abscheiden kondensierten Wassers (insbesondere für ein vorbestimmtes Zeitintervall) geöffnet wird, wobei vorzugsweise ein Einlass und/oder ein Auslass für das Wasserstoff-Wasserdampf-Gemisch des ersten Wärmetauschers verschlossen werden, (wobei vorzugsweise gleichzeitig Schritt f) durchgeführt wird) und
- der Schritt c) oder f) durchgeführt wird.

Es ist vorteilhaft, wenn in Schritt c) eine Temperatur des Wasserstoff-Wasserdampf-Gemisches im zweiten Wärmetauscher und/oder nach dem Austragen aus dem zweiten Wärmetauscher gemessen wird und basierend auf einer Feststellung, dass die gemessene Temperatur einen vorbestimmten Temperaturgrenzwert übersteigt:
- ein Wasserauslassventil des zweiten Wärmetauschers zum Abscheiden kondensierten Wassers (insbesondere für ein vorbestimmtes Zeitintervall) geöffnet wird, wobei vorzugsweise ein Einlass und/oder ein Auslass für das Wasserstoff-Wasserdampf-Gemisch des zweiten Wärmetauschers verschlossen werden, (wobei vorzugsweise gleichzeitig Schritt e) durchgeführt wird) und
- der Schritt d) oder e) durchgeführt wird.

Die Feststellungen in Bezug auf den Taupunkt und die Temperatur können kombiniert sein und/oder können jeweils notwendige oder hinreichende Bedingungen für die Umschaltung bzw. die Öffnung des Wasserauslassventils sein.

Die Erfindung betrifft auch ein Verfahren zur Herstellung von Wasserstoff, wobei ein Wasserstoff-Wasserdampf-Gemisch mit einem Wasserdampfanteil mittels Elektrolyse eines Wasser enthaltenden Ausgangsstoffs hergestellt wird und mit diesem Wasserstoff-Wasserdampf-Gemisch das Verfahren zur Trocknung eines Wasserstoff-Wasserdampf-Gemisches gemäß einer der hierin beschriebenen Varianten durchgeführt wird. Bei der Herstellung mittels Elektrolyse hat das resultierende Wasserstoff-Wasserdampf-Gemisch in der Regel eine Temperatur, die ausreichend ist, um Schnee und/oder Eis aus dem jeweiligen Wärmetauscher im Regenerationsbetrieb abzutauen. Das Herstellen des Wasserstoff-Wasserdampf-Gemisches mit einem Wasserdampfanteil erfolgt insbesondere mittels Elektrolyse eines Wassers enthaltenden Ausgangsstoffs bevorzugt mittels Protonen-Austausch-Membran- oder Polymer-Elektrolyt-Membran-Elektrolyse. Der Betriebsdruck bei der Elektrolyse kann zum Beispiel wasserstoffseitig (Kathode) 40 bar betragen. Das Herstellen des Wasserstoff-Wasserdampf-Gemisches mit einem Wasserdampfanteil weist vorzugsweise einen oder mehrere der Schritte auf:
Abscheiden von flüssigem Wasser aus dem Wasserstoff-Wasserdampf-Gemisch;
Abscheiden von Sauerstoff aus dem Wasserstoff-Wasserdampf-Gemisch;
Vorkühlen des Wasserstoff-Wasserdampf-Gemisches auf eine Temperatur von weniger als 20°C, bevorzugt weniger als 15°C, besonders bevorzugt weniger als 12°C, in einer Vorkühlereinheit.

Das Wasserstoff-Wasserdampf-Gemisch enthaltend den Wasserdampf-anteil kann beispielsweise auch mittels Reformierung hergestellt und/oder aus einem Langzeitspeicher bereitgestellt werden.

Die Erfindung betrifft auch eine Wasserstofferzeugungsvorrichtung mit einer Vorrichtung zur Herstellung eines Wasserstoff-Wasserdampf-Gemisches, insbesondere einen Elektrolyseur zur Elektrolyse eines Wasser enthaltenden Ausgangsstoffs, und mit einer Wasserstofftrocknungsvorrichtung gemäß einer der hierin beschriebenen Ausführungsformen, wobei vorzugsweise die Vorrichtung zur Herstellung eines Wasserstoff-Wasserdampf-Gemisch mit einem Wasserdampfanteil aufweist:
einen Wasserabscheider zur Abscheidung flüssigen Wassers aus dem Wasserstoff-Wasserdampf-Gemisch;
einen Sauerstoffabscheider zur Abscheidung von Sauerstoff aus dem Wasserstoff-Wasserdampf-Gemisch; und/oder
eine Vorkühlereinheit zur Vorkühlung des Wasserstoff-Wasserdampf-Gemisches auf eine Temperatur von weniger als 50°C, bevorzugt weniger als 40°C, besonders bevorzugt weniger als 30°C. Die Wasserstofferzeugungsvorrichtung ist insbesondere dazu eingerichtet, das Verfahren zur Herstellung von Wasserstoff, zumindest in einer der hierin beschriebenen Varianten, durchzuführen. Die Kühlvorrichtung kann beispielsweise eine Kältemaschine sein und/oder ein Peltier-Element und/oder einen Verflüssigungssatz aufweisen. Die Kühlvorrichtung weist vorzugsweise eine Wärmesenke, insbesondere ein kryogenes Kälteaggregat (z.B. einen Sole-Kühler), auf. Die Kühlvorrichtung weist bevorzugt einen Wärmetauscher, insbesondere einen Vorwärmetauscher bzw. Economizer ("Restwärmeverwerter"), zur Wärmeübertragung zwischen aus dem ersten Wärmetauscher bzw. dem zweiten Wärmetauscher ausgetragenen ("verbrauchtem") Kältefluid und dem ersten Wärmetauscher bzw. dem zweiten Wärmetauscher zuzuführenden ("frischem") Kältefluid auf; einen Verdichter, insbesondere einen Kältemittel-Verdichter; und/oder einen Kondensator auf. Zur Zuleitung/Zuführung des Kältefluids zum ersten Wärmetauscher bzw. zum zweiten Wärmetauscher ist vorzugsweise jeweils ein Expansionsventil vorgesehen. Es sind vorzugsweise Leitungen zwischen dem ersten Wärmetauscher und der Kühlvorrichtung, und dem zweiten Wärmetauscher und der Kühlvorrichtung vorgesehen. Die Wasserstofferzeugungsvorrichtung weist vorzugsweise Leitungen für das Wasserstoff-Wasserdampf-Gemisch von der Vorrichtung zur Herstellung des Wasserstoff-Wasserdampf-Gemisch zur Zufuhr der Wasserstofftrocknungsvorrichtung auf.

Bezugnehmend auf die Wasserstofftrocknungsvorrichtung ist es vorteilhaft, wenn diese eine Kontrolleinheit aufweist, die vorzugsweise die Ventil- und Leitungsanordnung steuern kann und die dazu eingerichtet ist, die Wasserstofftrocknungsvorrichtung zur Durchführung des Verfahrens zur Trocknung des Wasserstoff-Wasserdampf-Gemisches gemäß einer der hierin beschriebenen Ausführungsformen zu steuern.

Es ist vorteilhaft, wenn der erste Wärmetauscher und der zweite Wärmetauscher jeweils einen Einlass für das Wasserstoff-Wasserdampf-Gemisch und einen Auslass für das Wasserstoff-Wasserdampf-Gemisch aufweisen. Bevorzugt ist die Ventil- und Leitungsanordnung dazu eingerichtet:
- im Abscheidebetrieb des ersten Wärmetauschers und Regenerationsbetrieb des zweiten Wärmetauschers das Wasserstoff-Wasserdampf-Gemisch von der Zufuhr dem Auslass des zweiten Wärmetauschers zuzuleiten und von dem Einlass des zweiten Wärmetauschers dem Einlass des ersten Wärmetauschers zuzuleiten und
- im Regenerationsbetrieb des ersten Wärmetauschers und Abscheidebetrieb des zweiten Wärmetauschers das Wasserstoff-Wasserdampf-Gemisch von der Zufuhr dem Auslass des ersten Wärmetauschers zuzuleiten und vom Einlass des ersten Wärmetauschers dem Einlass des zweiten Wärmetauschers zuzuleiten.

Es ist vorteilhaft, wenn die Ventil- und Leitungsanordnung weiters dazu eingerichtet ist:
- in einem reinen Abscheidebetrieb des ersten Wärmetauschers das Wasserstoff-Wasserdampf-Gemisch von der Zufuhr dem Einlass des ersten Wärmetauschers zuzuleiten und von dem Auslass des ersten Wärmetauschers der Abfuhr zuzuleiten; und/oder
- in einem reinen Abscheidebetrieb des zweiten Wärmetauschers das Wasserstoff-Wasserdampf-Gemisch von der Zufuhr dem Einlass des zweiten Wärmetauschers zuzuleiten und von dem Auslass des zweiten Wärmetauschers der Abfuhr zuzuleiten.

Es ist vorteilhaft, wenn ein Einlass für das Wasserstoff-Wasserdampf-Gemisch des ersten Wärmetauschers und ein Einlass für das Wasserstoff-Wasserdampf-Gemisch des zweiten Wärmetauschers über die Ventil- und Leitungsanordnung miteinander verbunden oder verbindbar sind. Somit kann, wenn zuerst einer der Wärmetauscher vom Wasserstoff-Wasserdampf-Gemisch zur Regeneration des jeweiligen Wärmetauschers in umgekehrter Richtung durchlaufen wird (also das Wasserstoff-Wasserdampf-Gemisch am Auslass zugeführt und vom Einlass ausgetragen wird), das Wasserstoff-Wasserdampf-Gemisch dem jeweils anderen Wärmetauscher am Einlass zugeführt werden. Bevorzugt ist die Ventil- und Leitungsanordnung dazu geeignet, die Zufuhr mit dem Einlass des ersten Wärmetauschers zu verbinden und die Zufuhr mit dem Einlass des zweiten Wärmetauschers zu verbinden.

Es ist vorteilhaft, wenn der erste Wärmetauscher und der zweite Wärmetauscher jeweils zur (insbesondere indirekten) Wärmeübertragung zwischen dem Wasserstoff-Wasserdampf-Gemisch und dem Kältefluid ist, wobei der erste Wärmetauscher und der zweite Wärmetauscher jeweils einen ersten Rohrraum für das Wasserstoff-Wasserdampf-Gemisch und einen zweiten Rohrraum für das Kältefluid aufweisen. Der erste Rohrraum ist jeweils mit dem jeweiligen Einlass und Auslass verbunden und der zweite Rohrraum ist jeweils mit der jeweiligen Zuleitung und Ableitung verbunden. Vorzugsweise werden das Wasserstoff-Wasserdampf-Gemisch und das Kältefluid im Gegenstrom oder im Kreuzstrom geführt. Insbesondere wird das Wasserstoff-Wasserdampf-Gemisch im Gegenstrom geführt, wenn das Wasserstoff-Wasserdampf-Gemisch dem jeweiligen Wärmetauscher über den Einlass zugeführt und über den Auslass ausgetragen wird und das Kältefluid dem jeweiligen Wärmetauscher über die Zuleitung zugeführt und über die Ableitung abgeführt wird. Optional weist der erste Rohrraum eine hydrophobe Oberfläche auf, sodass Wasserdampf sich vorzugsweise in flüssiger Form absetzt und zu einem geringeren Anteil gefriert. Unter indirekter Wärmeübertragung wird verstanden, dass die Stoffströme, zwischen denen Wärme übertragen werden sollen, räumlich insbesondere durch eine wärmedurchlässige Wand getrennt sind. Der erste Rohrraum und der zweite Rohrraum (jeweils des ersten Wärmetauschers bzw. des zweiten Wärmetauschers) können eine gemeinsame Wand aufweisen. Es ist bevorzugt, wenn der erste Rohrraum Einbauten aufweist, die den Weg des Wasserstoff-Wasserdampf-Gemisch durch den ersten Rohrraum verlängern und/oder die dazu eingerichtet sind, das Wasserstoff-Wasserdampf-Gemisch quer zum ersten Rohrraum zu führen. Bevorzugt weisen die Einbauten eine Neigung (zur Horizontalen) auf, sodass abgetautes Wasser von den Einbauten abrinnen kann. Die Einbauten können beispielsweise blechförmig und/oder oval sein und dichten vorzugsweise den ersten Rohrraum auf einer Seite der jeweiligen Einbaute ab, wobei auf der anderen Seite eine Öffnung besteht, durch die das Wasserstoff-Wasserdampf-Gemisch fließen kann.

In einer bevorzugten Variante weist das Verfahren zur Trocknung des Wasserstoff-Wasserdampf-Gemisches weiters zumindest einen der Schritte auf: Abscheiden von Wasser und/oder Eis aus dem ersten Wärmetauscher, insbesondere aus dem ersten Rohrraum des ersten Wärmetauschers; Abscheiden von Wasser und/oder aus dem zweiten Wärmetauscher, insbesondere aus dem ersten Rohrraum des zweiten Wärmetauschers. Hierfür weist der erste Rohrraum des ersten bzw. zweiten Wärmetauschers insbesondere ein Wasserauslassventil für Wasser und/oder Eis auf. Es kann ein Heizmittel zum Heizen des ersten Wärmetauschers und/oder des zweiten Wärmetauschers, insbesondere zumindest des jeweils ersten Rohrraums, vorgesehen sein, um ein Abtauen von Eis zu beschleunigen. Beispielsweise kann eine Heizung in einer Mantelrohrisolierung des jeweiligen Wärmetauschers vorgesehen sein. Das flüssige Wasser kann einfach abgeführt werden.

Es ist vorteilhaft, wenn der zweite Rohrraum zumindest teilweise innerhalb des ersten Rohrraums wendelförmig verläuft. Somit kann die zum Wärmeaustausch zur Verfügung stehende Oberfläche vergrößert werden. Vorteilhafterweise verläuft der wendelförmige zweite Rohrraum zumindest teilweise um eine rohrförmige Einbaute im ersten Rohrraum. Die rohrförmige Einbaute weist vorteilhafterweise ein Isolationsmaterial auf. Die Einbaute verringert das dem Wasserstoff-Wasserdampf-Gemisch zur Verfügung stehende Volumen, um die Strömungsbedingungen zu verbessern.

Im Folgenden wird die Erfindung anhand von in den Figuren gezeigten bevorzugten Ausführungsformen näher erläutert. Die Figuren zeigen im Einzelnen:
- Fig. 1: schematisch eine erste Ausführungsform der Wassertrocknungsvorrichtung;
- Fig. 2: schematisch eine zweite Ausführungsform der Wassertrocknungsvorrichtung;
- Fig. 3: schematisch eine dritte Ausführungsform der Wassertrocknungsvorrichtung;
- Fig. 4: schematisch eine vierte Ausführungsform der Wassertrocknungsvorrichtung
- Fig. 5: schematisch eine erste Ausführungsform eines Wärmetauschers in einer Schnittansicht;
- Fig. 6: schematisch eine zweite Ausführungsform eines Wärmetauschers in drei verschiedenen Ansichten;
- Fig. 7: schematisch eine dritte Ausführungsform eines Wärmetauschers in einer Schnittansicht;
- Fig. 8: schematisch eine vierte Ausführungsform eines Wärmetauschers in einer Schnittansicht;
- Fig. 9: schematisch eine fünfte Ausführungsform eines Wärmetauschers in einer Schnittansicht;
- Fig. 10: schematisch eine sechste Ausführungsform eines Wärmetauschers in einer Schnittansicht.

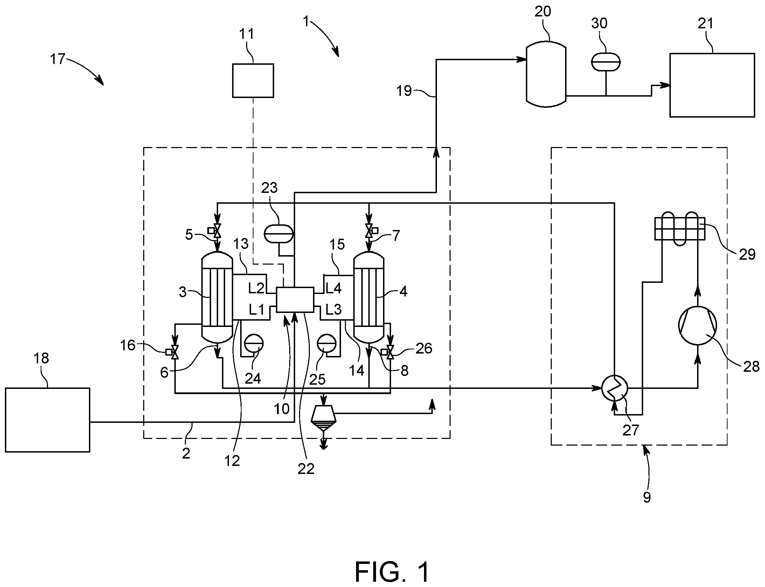

Fig. 1 zeigt schematisch eine erste Ausführungsform der Wassertrocknungsvorrichtung 1. Im Konkreten zeigt Fig. 1 eine Wasserstofferzeugungsvorrichtung 17 mit einer Vorrichtung 18 zur Herstellung eines Wasserstoff-Wasserdampf-Gemisches, die insbesondere einen Elektrolyseur zur Elektrolyse eines Wasser enthaltenden Ausgangsstoffs aufweist, und mit der Wasserstofftrocknungsvorrichtung 1 gemäß der ersten Ausführungsform.

Die Wasserstofftrocknungsvorrichtung 1 weist eine Zufuhr 2 für ein Wasserstoff-Wasserdampf-Gemisch enthaltend einen Wasserdampfanteil und eine Abfuhr 19 für das (getrocknete) Wasserstoff-Wasserdampf-Gemisch auf. Die Abfuhr ist über eine weitere Trocknungsvorrichtung, insbesondere einen Zeolithen 20, mit einem Verdichter und/oder Speicher 21 verbunden, wobei zwischen dem Zeolithen 20 und dem Verdichter und/oder Speicher 21 ein Taupunktsensor 30 vorgesehen sein kann. Weiter weist die Wasserstofftrocknungsvorrichtung 1 einen ersten Wärmetauscher 3 zur Wärmeübertragung zwischen dem Wasserstoff-Wasserdampf-Gemisch und einem Kältefluid, mit einer Zuleitung 5 für das Kältefluid und einer Ableitung 6 für das Kältefluid, und einen zweiten Wärmetauscher 4 zur Wärmeübertragung zwischen dem Wasserstoff-Wasserdampf-Gemisch und dem Kältefluid, mit einer Zuleitung 7 für das Kältefluid und einer Ableitung 8 für das Kältefluid, auf. Außerdem weist die Wassertrocknungsvorrichtung eine Kühlvorrichtung 9 auf, die dazu eingerichtet ist, das Kältefluid auf eine Temperatur von kleiner oder gleich 0°C zu kühlen und die Zuleitung 5 des ersten Wärmetauschers 3 und die Zuleitung 7 des zweiten Wärmetauschers 4 mit dem Kältefluid zur Abscheidung von Wasserdampf aus dem Wasserstoff-Wasserdampf-Gemisch im jeweiligen Wärmetauscher 3, 4 zu versorgen. Die Ableitung 6 des ersten Wärmetauschers 3 und die Ableitung 8 des zweiten Wärmetauschers 4 sind wiederum mit der Kühlvorrichtung 9 verbunden.

Die Wassertrocknungsvorrichtung 1 weist außerdem eine Ventil-und Leitungsanordnung 10, die insbesondere eine Ventilinsel 22 aufweist und die dazu eingerichtet ist:
- in einem Abscheidebetrieb des ersten Wärmetauschers 3 und einem Regenerationsbetrieb des zweiten Wärmetauschers 4 das Wasserstoff-Wasserdampf-Gemisch von der Zufuhr 2 dem zweiten Wärmetauscher 4 zuzuleiten und vom zweiten Wärmetauscher 4 dem ersten Wärmetauscher 3 zuzuleiten und
- in einem Regenerationsbetrieb des ersten Wärmetauschers 3 und einem Abscheidebetrieb des zweiten Wärmetauschers 4 das Wasserstoff-Wasserdampf-Gemisch von der Zufuhr 2 dem ersten Wärmetauscher 3 zuzuleiten und vom ersten Wärmetauscher 3 dem zweiten Wärmetauscher 4 zuzuleiten.

Der erste Wärmetauscher 3 weist einen Einlass 12 für das Wasserstoff-Wasserdampf-Gemisch und einen Auslass 13 für das Wasserstoff-Wasserdampf Gemisch auf. Der zweite Wärmetauscher 4 weist ebenfalls einen Einlass 14 für das Wasserstoff-Wasserdampf-Gemisch und einen Auslass 15 für das Wasserstoff-Wasserdampf-Gemisch auf. Die Ventil- und Leitungsanordnung 10 ist weiter dazu eingerichtet:
- im Abscheidebetrieb des ersten Wärmetauschers 3 und Regenerationsbetrieb des zweiten Wärmetauschers 4 das Wasserstoff-Wasserdampf-Gemisch von der Zufuhr 2 dem Auslass 15 des zweiten Wärmetauschers 4 zuzuleiten und von dem Einlass 14 des zweiten Wärmetauschers 4 dem Einlass 12 des ersten Wärmetauschers 3 zuzuleiten und
- im Regenerationsbetrieb des ersten Wärmetauschers 3 und Abscheidebetrieb des zweiten Wärmetauschers 4 das Wasserstoff-Wasserdampf-Gemisch von der Zufuhr 2 dem Auslass 13 des ersten Wärmetauschers 3 zuzuleiten und vom Einlass 12 des ersten Wärmetauschers 3 dem Einlass 14 des zweiten Wärmetauschers 4 zuzuleiten. Dafür ist ein Einlass 12 für das Wasserstoff-Wasserdampf-Gemisch des ersten Wärmetauschers und ein Einlass 14 für das Wasserstoff-Wasserdampf-Gemisch des zweiten Wärmetauschers 4 über die Ventil- und Leitungsanordnung 10 miteinander verbunden oder verbindbar.

Als Alternative kann die Ventil- und Leitungsanordnung 10 weiter dazu eingerichtet sein:
- im Abscheidebetrieb des ersten Wärmetauschers 3 und Regenerationsbetrieb des zweiten Wärmetauschers 4 das Wasserstoff-Wasserdampf-Gemisch von der Zufuhr 2 dem Einlass 15 des zweiten Wärmetauschers 4 zuzuleiten und von dem Auslass 14 des zweiten Wärmetauschers 4 dem Einlass 12 des ersten Wärmetauschers 3 zuzuleiten und
- im Regenerationsbetrieb des ersten Wärmetauschers 3 und Abscheidebetrieb des zweiten Wärmetauschers 4 das Wasserstoff-Wasserdampf-Gemisch von der Zufuhr 2 dem Einlass 13 des ersten Wärmetauschers 3 zuzuleiten und vom Auslass 12 des ersten Wärmetauschers 3 dem Einlass 14 des zweiten Wärmetauschers 4 zuzuleiten. D.h. als Alternative zum Durchströmen des jeweiligen Wärmetauschers in umgekehrter Richtung im Regenerationsbetrieb kann auch ein Durchströmen im Regenerationsbetrieb in dieselbe Richtung wie im Abscheidebetrieb vorgesehen sein.

Die Ventil- und Leitungsanordnung 10 ist weiters dazu eingerichtet ist:
- in einem reinen Abscheidebetrieb des ersten Wärmetauschers 3 das Wasserstoff-Wasserdampf-Gemisch von der Zufuhr 2 dem Einlass 12 des ersten Wärmetauschers 3 zuzuleiten und von dem Auslass 13 des ersten Wärmetauschers 3 der Abfuhr zuzuleiten; und/oder
- in einem reinen Abscheidebetrieb des zweiten Wärmetauschers das Wasserstoff-Wasserdampf-Gemisch von der Zufuhr dem Einlass des zweiten Wärmetauschers zuzuleiten und von dem Auslass des zweiten Wärmetauschers der Abfuhr zuzuleiten.

Außerdem ist eine Kontrolleinheit 11 vorgesehen, die zumindest die Ventil- und Leitungsanordnung steuern kann und die dazu eingerichtet ist, die Wasserstofftrocknungsvorrichtung 1 zur Durchführung des Verfahrens gemäß einer der hierin beschriebenen Varianten zu steuern.

Die Wassertrocknungsvorrichtung 1 wird insbesondere wie im Folgenden beschrieben betrieben. Dabei wird von der Vorrichtung 18 zur Herstellung des Wasserstoff-Wasserdampf-Gemisches das Wasserstoff-Wasserdampf-Gemisch im Wesentlichen kontinuierlich der Zufuhr 2 zugeführt, beispielsweise mit einem Taupunkt von 20°C.

In einem reinen Abscheidebetrieb des ersten Wärmetauschers (Schritt e)) erfolgt mit der Ventil- und Leitungsanordnung 10 das Zuleiten des Wasserstoff-Wasserdampf-Gemisches von der Zufuhr 2 zum Einlass 12 des ersten Wärmetauschers 3, wobei das Kältefluid mit einer Temperatur von kleiner oder gleich 0°C, beispielsweise -30°C, zum ersten Wärmetauscher 3 zugeleitet wird, zur Abscheidung von Wasserdampf aus dem Wasserstoff-Wasserdampf-Gemisch; und das Austragen des Wasserstoff-Wasserdampf-Gemisches aus dem ersten Wärmetauscher 3. Beim Austragen wird das Wasserstoff-Wasserdampf-Gemisch vom Auslass 13 des ersten Wärmetauschers 3 zur Abfuhr 19 geleitet. Dabei hat das Wasserstoff-Wasserdampf-Gemisch vor dem Zuleiten des Wasserstoff-Wasserdampf-Gemisches zum ersten Wärmetauscher 3 nicht den zweiten Wärmetauscher 4 durchlaufen hat.

Mit dem Taupunktsensor 23 in der Abfuhr 19 wird ein Taupunkt des Wasserstoff-Wasserdampf-Gemisches nach dem Austragen aus dem ersten Wärmetauscher 3 gemessen. Während der Trocknung im ersten Wärmetauscher 3 setzt sich Schnee und/oder Eis im ersten Wärmetauscher 3 ab, wodurch die Wärmeübertragung vom Kältefluid auf das Wasserstoff-Wasserdampf-Gemisch verringert wird und somit der Taupunkt des aus dem ersten Wärmetauscher 3 ausgetragenen Wasserstoff-Wasserdampf-Gemisches ansteigt. Wenn der gemessene Taupunkt einen vorbestimmten Taupunktgrenzwert (beispielsweise -25°C) erreicht oder übersteigt, erfolgt eine Umschaltung auf den Regenerationsbetrieb des ersten Wärmetauschers 3 und Abscheidebetrieb des zweiten Wärmetauschers 4 (Schritt d)).

Im Regenerationsbetrieb des ersten Wärmetauschers 3 und Abscheidebetrieb des zweiten Wärmetauschers 4 wird die Zuleitung des Kältefluids zum ersten Wärmetauscher 3 unterbrochen und es erfolgt mit der Ventil- und Leitungsanordnung 10 das Zuleiten des Wasserstoff-Wasserdampf-Gemisches zum Auslass 13 des ersten Wärmetauschers 3 zum Regenerieren des ersten Wärmetauschers 3, insbesondere zum Abtauen von Schnee und/oder Eis aus dem ersten Wärmetauscher 3. Das Wasserstoff-Wasserdampf-Gemisch wird vom ersten Wärmetauscher 3 aus dessen Einlass 12 ausgetragen und dem Einlass 14 des zweiten Wärmetauschers 4 zugeführt. Das Kältefluid wird mit einer Temperatur von kleiner oder gleich 0°C, beispielsweise -30°C, zum zweiten Wärmetauscher zugeleitet, zur Abscheidung von Wasserdampf aus dem Wasserstoff-Wasserdampf-Gemisch. Das Wasserstoff-Wasserdampf-Gemisch wird über den Auslass 15 aus dem zweiten Wärmetauscher 4 ausgetragen und der Abfuhr 19 zugeführt.

Das dem ersten Wärmetauscher 3 zugeführte Wasserstoff-Wasserdampf-Gemisch dient in diesem Betriebsmodus dem Abtauen des Schnees und/oder Eis im ersten Wärmetauscher 3. Dabei erfolgt vorteilhafterweise gleichzeitig eine Vorkühlung des Wasserstoff-Wasserdampf-Gemisches. Die Temperatur des Wasserstoff-Wasserdampf-Gemisches nach dem Austragen aus dem ersten Wärmetauscher 3 wird mit dem Temperatursensor 24 gemessen. Sobald der erste Wärmetauscher 3 regeneriert ist, steigt die Temperatur des aus dem ersten Wärmetauscher 3 ausgetragenen Wasserstoff-Wasserdampf-Gemisches an. Wenn die vom Temperatursensor 24 gemessene Temperatur einen vorbestimmten Grenzwert (beispielsweise 5°C) übersteigt, erfolgt ein Umschalten auf den reinen Abscheidebetrieb des zweiten Wärmetauschers (Schritt f)). Außerdem wird ein Wasserauslassventil 16 des ersten Wärmetauschers 3 zum Abscheiden von kondensiertem Wasser im ersten Wärmetauscher 3 (kurzzeitig) geöffnet.

In einem reinen Abscheidebetrieb des zweiten Wärmetauschers 4 erfolgt mit der Ventil- und Leitungsanordnung 10 das Zuleiten des Wasserstoff-Wasserdampf-Gemisches von der Zufuhr 2 zum Einlass 14 des zweiten Wärmetauschers 4, wobei das Kältefluid mit einer Temperatur von kleiner oder gleich 0°C, beispielsweise - 30°C, zum zweiten Wärmetauscher 4 zugeleitet wird, zur Abscheidung von Wasserdampf aus dem Wasserstoff-Wasserdampf-Gemisch; und das Austragen des Wasserstoff-Wasserdampf-Gemisches aus dem zweiten Wärmetauscher 4. Beim Austragen wird das Wasserstoff-Wasserdampf-Gemisch vom Auslass 15 des zweiten Wärmetauschers 4 zur Abfuhr 19 geleitet. Dabei hat das Wasserstoff-Wasserdampf-Gemisch vor dem Zuleiten des Wasserstoff-Wasserdampf-Gemisches zum zweiten Wärmetauscher 4 nicht den ersten Wärmetauscher 3 durchlaufen hat.

Mit dem Taupunktsensor 23 in der Abfuhr 19 wird auch der Taupunkt des Wasserstoff-Wasserdampf-Gemisches nach dem Austragen aus dem zweiten Wärmetauscher 4 gemessen. Wenn der gemessene Taupunkt einen vorbestimmten Taupunktgrenzwert (beispielsweise -25°C) erreicht oder übersteigt, erfolgt eine Umschaltung auf den Regenerationsbetrieb des zweiten Wärmetauschers 4 und Abscheidebetrieb des ersten Wärmetauschers 3 (Schritt c)).

Im Regenerationsbetrieb des zweiten Wärmetauschers 4 und Abscheidebetrieb des ersten Wärmetauschers 3 wird das Zuleiten des Kältefluids zum zweiten Wärmetauscher 4 unterbrochen und es erfolgt mit der Ventil- und Leitungsanordnung 10 das Zuleiten des Wasserstoff-Wasserdampf-Gemisches zum Auslass 15 des zweiten Wärmetauschers 4 zum Regenerieren des zweiten Wärmetauschers 4, insbesondere zum Abtauen von Schnee und/oder Eis aus dem zweiten Wärmetauscher 4. Das Wasserstoff-Wasserdampf-Gemisch wird vom zweiten Wärmetauscher 4 aus dessen Einlass 13 ausgetragen und dem Einlass 12 des ersten Wärmetauschers 3 zugeführt. Das Kältefluid wird mit einer Temperatur von kleiner oder gleich 0°C, beispielsweise -30°C, zum ersten Wärmetauscher 3 zugeleitet, zur Abscheidung von Wasserdampf aus dem Wasserstoff-Wasserdampf-Gemisch. Das Wasserstoff-Wasserdampf-Gemisch wird über den Auslass 14 aus dem ersten Wärmetauscher 3 ausgetragen und der Abfuhr 19 zugeführt.

Das dem zweiten Wärmetauscher 4 zugeführte Wasserstoff-Wasserdampf-Gemisch dient in diesem Betriebsmodus dem Abtauen des Schnees und/oder Eis im zweiten Wärmetauscher 4. Die Temperatur des Wasserstoff-Wasserdampf-Gemisches nach dem Austragen aus dem zweiten Wärmetauscher 4 wird mit dem Temperatursensor 25 gemessen. Wenn die vom Temperatursensor 25 gemessene Temperatur einen vorbestimmten Grenzwert (beispielsweise 5°C) übersteigt, erfolgt ein Umschalten auf den reinen Abscheidebetrieb des ersten Wärmetauschers (Schritt e)) und das gesamte Verfahren wird wieder von Neuem durchgeführt. Außerdem wird ein Wasserauslassventil 26 des zweiten Wärmetauschers 4 zum Abscheiden von kondensiertem Wasser im zweiten Wärmetauscher 4 (kurzzeitig) geöffnet.

Das Kältefluid (bspw. R452a) wird dem ersten Wärmetauscher 3 bzw. dem zweiten Wärmetauscher 4 an deren jeweiliger Zuleitung 5, 7 flüssig zugeführt und an deren jeweiliger Ableitung 6, 8 gasförmig abgeführt. Die Kühlvorrichtung 9 weist einen Economizer 27 zur Übertragung der Restwärme von vom jeweiligen Wärmetauscher 3, 4 abgeführten Kältefluid auf den jeweiligen Wärmetauschern 3, 4 zuzuführendes, "frisches" Kältefluid auf. Weiters weist die Kühlvorrichtung einen Verdichter 28 und einen Kondensator 29 auf.

Das der Abfuhr 19 zugeführte Wasserstoff-Wasserdampf-Gemisch (mit stark oder vollkommen reduzierten Wasserdampf-Anteil) hat beispielsweise einen Taupunkt von -30°C. Nach dem Zeolithen 20 hat es einen Taupunkt von beispielsweise -65°C.

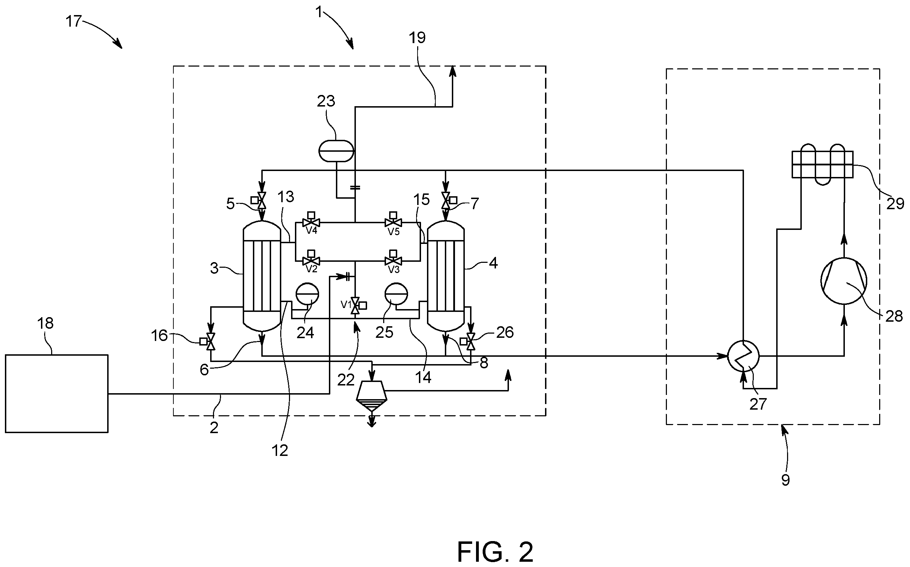

Fig. 2 zeigt eine zweite Ausführungsform der Wasserstofftrocknungsvorrichtung 1 (bzw. der Wassererzeugungsvorrichtung 17 mit der Wasserstofftrocknungsvorrichtung 1 gemäß der zweiten Ausführungsform). Die zweite Ausführungsform funktioniert analog zur ersten Ausführungsform und es sind gleiche Teile mit den gleichen Bezugszeichen versehen. In der Folge wird nur auf die Unterschiede der zweiten Ausführungsform gegenüber der ersten Ausführungsform eingegangen.

In der zweiten Ausführungsform ist die Ventil- und Leitungsanordnung 10 wie folgt ausgeführt: Es ist eine Verbindungsleitung zwischen der Einlass 12 des ersten Wärmetauschers 3 und dem Einlass 14 des zweiten Wärmetauschers vorgesehen. Die Verbindungsleitung ist über eine Leitung mit der Zufuhr 2 verbunden, in der ein erstes Ventil V1 vorgesehen ist. Die Zufuhr 2 ist weiters über eine Leitung mit dem Auslass 13 des ersten Wärmetauschers 3 verbunden, in der ein zweites Ventil V2 vorgesehen ist, und die Zufuhr 2 ist über eine Leitung mit dem Auslass 15 des zweiten Wärmetauschers 4 verbunden, in der ein drittes Ventil V3 vorgesehen ist. Der Auslass 13 des ersten Wärmetauschers 3 ist über eine Leitung weiters mit der Abfuhr 19, in der ein viertes Ventil V4 vorgesehen ist, und der Auslass 15 des zweiten Wärmetauschers 4 ist über eine Leitung mit der Abfuhr 19 verbunden, in der ein fünftes Ventil V5 vorgesehen ist.

Die Stellung der Ventile in den verschiedenen Betriebsmodi ist folgendermaßen:

| | Schritt e) | Schritt d) | Schritt f) | Schritt c) |
|---|---|---|---|---|
| V1 | offen | geschlossen | offen | geschlossen |
| V2 | geschlossen | offen | geschlossen | geschlossen |
| V3 | geschlossen | geschlossen | geschlossen | offen |
| V4 | offen | geschlossen | geschlossen | offen |
| V5 | geschlossen | offen | offen | geschlossen |

Dabei steht Schritt e) für den reinen Abscheidebetrieb des ersten Wärmetauschers 3, Schritt d) für den Regenerationsbetrieb des ersten Wärmetauschers 3 und Abscheidebetrieb des zweiten Wärmetauschers 4, Schritt f) für den reinen Abscheidebetrieb des zweiten Wärmetauschers 4 und Schritt c) für den Regenerationsbetrieb des zweiten Wärmetauschers 4 und Abscheidebetrieb des ersten Wärmetauschers 3. Zum Umschalten von einem Betriebsmodus auf den nächsten erfolgt eine entsprechende Umschaltung der Ventile. Außerdem muss beim Umschalten von Schritt e) auf Schritt d) die Zufuhr des Kältefluids zum ersten Wärmetauscher 3 unterbrochen werden und die Zufuhr zum zweiten Wärmetauscher 4 begonnen werden und beim Umschalten von Schritt f) auf Schritt c) die Zufuhr des Kältefluid zum zweiten Wärmetauscher 4 unterbrochen werden und die Zufuhr zum ersten Wärmetauscher 3 begonnen werden.

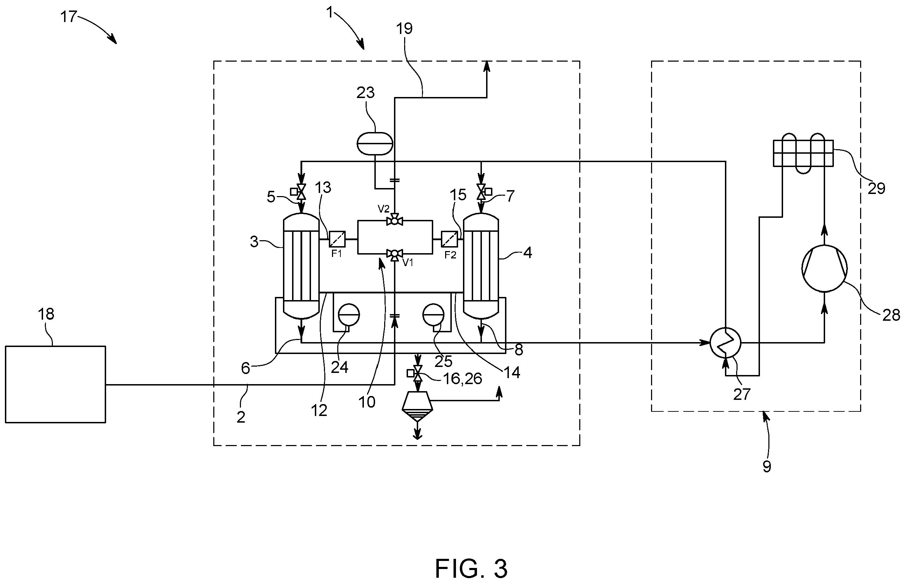

Fig. 3 zeigt eine dritte Ausführungsform der Wasserstofftrocknungsvorrichtung 1 (bzw. der Wassererzeugungsvorrichtung 17 mit der Wasserstofftrocknungsvorrichtung 1 gemäß der dritten Ausführungsform). Die dritte Ausführungsform funktioniert analog zur ersten Ausführungsform und es sind gleiche Teile mit den gleichen Bezugszeichen versehen. In der Folge wird nur auf die Unterschiede der dritten Ausführungsform gegenüber der ersten Ausführungsform eingegangen.

In der dritten Ausführungsform weist die Ventil- und Leitungsanordnung 10 ein erstes Drei-Wege-Ventil V1 auf, die die Zufuhr 2 wahlweise mit dem Auslass 13 des ersten Wärmetauschers 3 und dem Auslass 15 des zweiten Wärmetauschers 4 verbindet. Es ist ein zweites Drei-Wege-Ventil V2 vorgesehen, mit dem die Abfuhr 19 wahlweise mit dem Auslass 13 des ersten Wärmetauschers 3 und dem Auslass 15 des zweiten Wärmetauschers verbunden werden kann. Weiters ist ein erster Filter F1 beim Auslass 13 des ersten Wärmetauschers 3 und ein zweiter Filter F2 beim Auslass 15 des zweiten Wärmetauschers 4 vorgesehen. Die Ventil- und Leitungsanordnung 10 weist eine Verbindungsleitung auf, die den Einlass 12 des ersten Wärmetauschers und den Einlass 14 des zweiten Wärmetauschers direkt verbindet. In dieser Leitung ist kein Ventil vorgesehen.

In der dritten Ausführungsform ist somit nur ein Wechsel zwischen
- dem Regenerationsbetrieb des ersten Wärmetauschers 3 und Abscheidebetrieb des zweiten Wärmetauschers 4 (Schritt d)) und
- dem Regenerationsbetrieb des zweiten Wärmetauschers 4 und Abscheidebetrieb des ersten Wärmetauschers 3 (Schritt c)) vorgesehen. Der reine Regenerationsbetrieb eines der Wärmetauscher 3, 4 (Schritt e) oder f)) ist in der dritten Ausführungsform nicht vorgesehen. Jener Wärmetauscher 3, 4, der nicht im Abscheidebetrieb ist, ist im Regenerationsbetrieb.

In der dritten Ausführungsform sind außerdem das Wasserauslassventil 16 des ersten Wärmetauschers 3 und das Wasserauslassventil 26 des zweiten Wärmetauschers 4 in einem einzigen Ventil integriert.

Der Zeolith 20 und der Verdichter und/oder Speicher 21 sind in Fig. 2 und Fig. 3 nicht dargestellt.

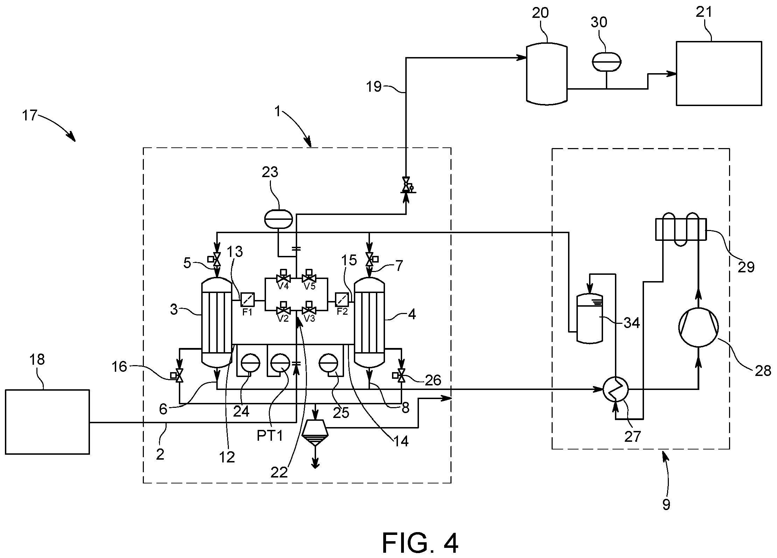

Fig. 4 zeigt eine vierte Ausführungsform der Wasserstofftrocknungsvorrichtung 1 (bzw. der Wassererzeugungsvorrichtung 17 mit der Wasserstofftrocknungsvorrichtung 1 gemäß der vierten Ausführungsform). Die vierte Ausführungsform funktioniert analog zur dritten Ausführungsform und es sind gleiche Teile mit den gleichen Bezugszeichen versehen. In der Folge wird nur auf die Unterschiede der vierten Ausführungsform gegenüber der dritten Ausführungsform eingegangen.

In der vierten Ausführungsform sind statt der zwei Drei-WegeVentile V1, V2 der dritten Ausführungsform vier Zwei-Wege-Ventile V2, V3, V4, V5 vorgesehen, analog zur zweiten Ausführungsform. Wie bei der dritten Ausführungsform weist die Ventil- und Leitungsanordnung 10 eine Verbindungsleitung auf, die den Einlass 12 des ersten Wärmetauschers 3 und den Einlass 14 des zweiten Wärmetauschers 4 direkt verbindet. In dieser Leitung ist kein Ventil vorgesehen (d.h., das erste Ventil V1 der zweiten Ausführungsform ist in der vierten Ausführungsform nicht vorgesehen). In der Verbindungsleitung zwischen dem Einlass 12 des ersten Wärmetauschers 3 und dem Einlass 14 des zweiten Wärmetauschers 4 ist ein Drucksensor PT1 vorgesehen. Der Drucksensor dient der Überwachung des Systemdrucks.

Beim Abführen des flüssigen Wassers nach der Regenerierung des jeweiligen Wärmetauschers 3, 4 aus dem jeweiligen Wasserauslassventil 16, 26 wird der Systemdruck nur gering absinken (da nur geringe Mengen an Wasser abgetaut werden). Sobald das abgetaute Wasser aus dem jeweiligen Wärmetauscher 3, 4 abgeschieden ist, wird der Systemdruck durch den ausströmenden Wasserstoff jedoch stärker bzw. schneller absinken. Übersteigt der Druckabfall einen vorgegebenen Druckgrenzwert, wird das jeweilige Wasserauslassventil 16, 26 geschlossen. Bevor der jeweilige Wärmetauscher 3, 4 wieder in den Trocknungsbetrieb geht, kann dieser Vorgang vorsorglich ein zweites Mal wiederholt werden, um sicherzustellen, dass sich kein Restwasser im jeweiligen Wärmetauscher befindet. Dieses Vorgehen kann bei jeder beliebigen Ausführungsform der Vorrichtung 1 angewandt werden.

Das Wasserauslassventil 16 des ersten Wärmetauschers 3 zum Abscheiden von kondensiertem Wasser im ersten Wärmetauscher 3 und das Wasserauslassventil 26 des zweiten Wärmetauschers 4 zum Abscheiden von kondensiertem Wasser im zweiten Wärmetauscher 4 sind in der vierten Ausführungsform getrennt ausgeführt.

In der Abfuhr 19 ist ein Rückdruckregler BPR1 vorgesehen. Dieser dient der Einstellung des Systemdrucks. Der Druck nach BPR1 entspricht dem Saugdruck des Verdichters 21, der variabel sein kann und z.B. 20 bis 30 bar betragen kann.

Von der Vorrichtung 18 zur Herstellung des Wasserstoff-Wasserdampf-Gemisches wird das Wasserstoff-Wasserdampf-Gemisch im Wesentlichen kontinuierlich der Zufuhr 2 zugeführt, beispielsweise mit einem Taupunkt von zwischen 20°C und 40°C.

Die Kühlvorrichtung 9 weist zusätzlich einen Flüssigkeitssammler 34 auf.

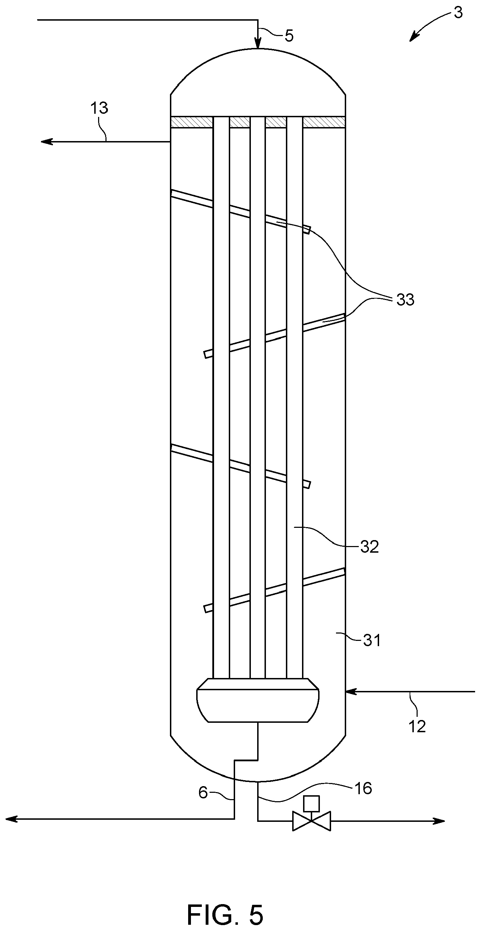

Die Fig. 5 bis 10 zeigen jeweils verschiedene Ausführungsformen eines Wärmetauschers, der als erster Wärmetauscher 3 und oder als zweiter Wärmetauscher 4 in der Wassertrocknungsvorrichtung 1 vorgesehen werden kann, beispielsweise in der Wassertrocknungsvorrichtung 1 gemäß der ersten, zweiten oder dritten Ausführungsform. Der in den Fig. 5 bis 10 gezeigte Wärmetauscher wird im Folgenden unter Verwendung der Bezugszeichen des ersten Wärmetauschers 3 beschrieben, kann jedoch gleichermaßen den zweiten Wärmetauscher 4 darstellen.

Fig. 5 zeigt schematisch eine erste Ausführungsform des ersten Wärmetauschers 3 in einer Schnittansicht. Der erste Wärmetauscher 3 ist zur Wärmeübertragung zwischen dem Wasserstoff-Wasserdampf-Gemisch und dem Kältefluid vorgesehen, wobei der erste Wärmetauscher 3 einen ersten Rohrraum 31 für das Wasserstoff-Wasserdampf-Gemisch und einen zweiten Rohrraum 32 für das Kältefluid aufweist, in dem das Wasserstoff-Wasserdampf-Gemisch und das Kältefluid (im Abscheidebetrieb des ersten Wärmetauschers 3) im Gegenstrom geführt werden. Der erste Wärmetauscher 3 hat eine Zuleitung 5 zum zweiten Rohrraum 32 und eine Ableitung 6 vom zweiten Rohrraum 32. Weiters hat der erste Wärmetauscher 3 einen Einlass 12 zum ersten Rohrraum 31 und einen Auslass 13 vom ersten Rohrraum 31. Außerdem ist ein Wasserauslassventil 16 zum Ablassen von im ersten Rohrraum 31 auskondensiertem Wasser vorgesehen. Der zweite Rohrraum 32 ist von einer Vielzahl an Rohren gebildet, die durch den ersten Rohrraum 31 verlaufen. In dem ersten Rohrraum 31 sind Einbauten 33, insbesondere Bleche vorgesehen. Die Einbauten führen dazu, dass das Wasserstoff-Wasserdampf-Gemisch einen mäanderförmigen Weg durch den ersten Rohrraum 31 nehmen muss. Somit strömt das Wasserstoff-Wasserdampf-Gemisch den zweiten Rohrraum 32 schräg bzw. im Wesentlichen quer an (und wechselt anschließend die Richtung). Hierdurch kann die Wärmeübertragung zwischen Kältefluid und Wasserstoff-Wasserdampf-Gemisch verbessert werden. Die Einbauten 33 dichten dabei den ersten Rohrraum 31 abwechselnd auf einer Seite ab. Weiters sind die Einbauten 33 schräg angeordnet, sodass abgetautes Wasser abrinnen kann und von der Schwerkraft zum Wasserauslassventil 16 geleitet wird. Dementsprechend sind die Einbauten 33 gegenüber einer Horizontalen geneigt, wobei die Neigung in Richtung der von den Einbauten 33 freigelassenen Öffnungen, durch die das Wasserstoff-Wasserdampf-Gemisch fließen kann, nach unten verläuft.

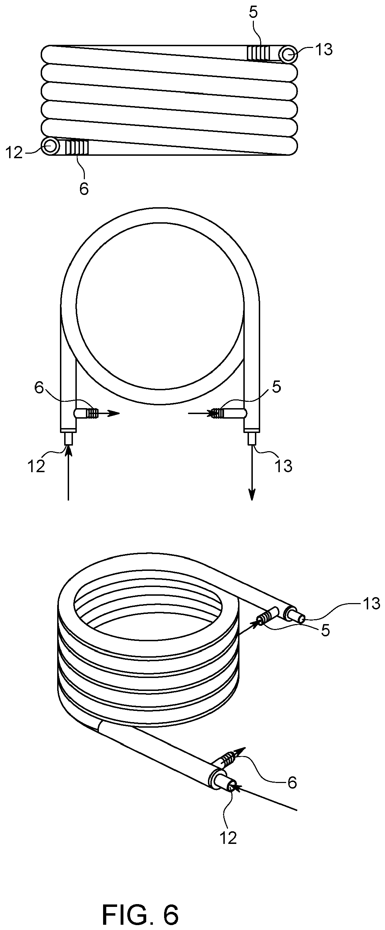

Fig. 6 zeigt schematisch eine zweite Ausführungsform des ersten Wärmetauschers 3 in drei verschiedenen Ansichten. Der erste Wärmetauscher 3 weist wiederum einen ersten Rohrraum 31 für das Wasserstoff-Wasserdampf-Gemisch mit einem Einlass 12 und einem Auslass 13 und einen zweiten Rohrraum 32 für das Kältefluid mit einer Zuleitung 5 und einer Ableitung 6 auf. Das Auslassen von kondensiertem Wasser erfolgt in dieser Ausführungsform über den Einlass 12. Der erste Wärmetauscher 3 der zweiten Ausführungsform ist ein Rohr-im-Rohr-Wärmetauscher. Dieser wird (im Abscheidebetrieb) im Gegenstrom betrieben, wobei der erste Rohrraum 31 innen und der zweite Rohrraum 32 außen vorgesehen ist. Es kann eine Isolierung nach außen vorgesehen sein, damit möglichst wenig Kälte an die Umgebung abgegeben wird.

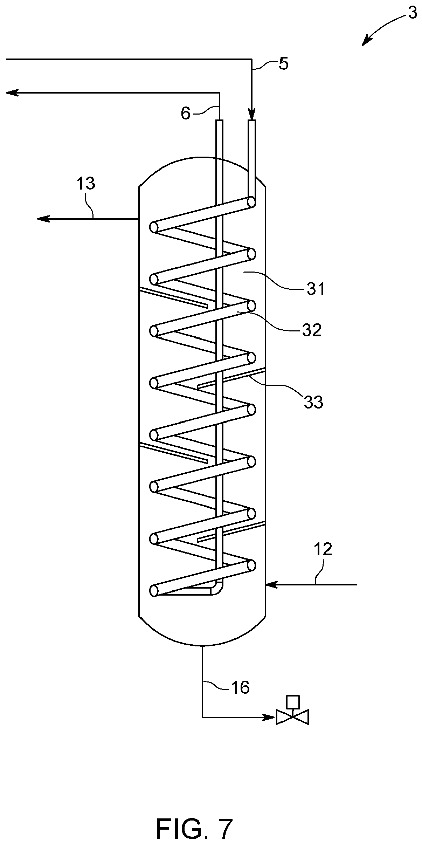

Fig. 7 zeigt schematisch eine dritte Ausführungsform des ersten Wärmetauschers 3 in einer Schnittansicht. Der erste Wärmetauscher 3 weist wiederum einen ersten Rohrraum 31 für das Wasserstoff-Wasserdampf-Gemisch mit einem Einlass 12 und einem Auslass 13, einen zweiten Rohrraum 32 für das Kältefluid mit einer Zuleitung 5 und einer Ableitung 6 auf und ein Wasserauslassventil 16 auf. Optional sind Einbauten 33 analog zur ersten Ausführungsform vorgesehen. In dieser Ausführungsform verläuft der zweite Rohrraum 32 zumindest teilweise innerhalb des ersten Rohrraums 31 wendelförmig, wodurch eine große Wärmeaustauschoberfläche erzielt wird.

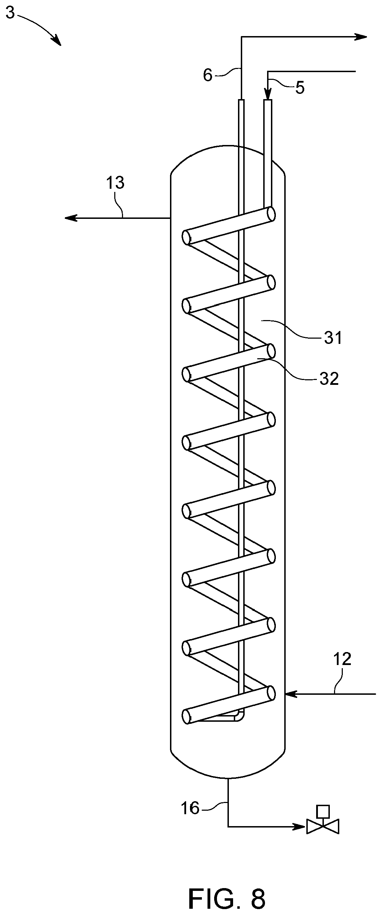

Fig. 8 zeigt schematisch eine vierte Ausführungsform des ersten Wärmetauschers 3 in einer Schnittansicht. Diese Ausführungsform ist gleich ausgeführt wie die dritte Ausführungsform, bis darauf, dass der erste Wärmetauscher kompakter und enger gebaut ist, und die Steigung des wendelförmigen zweiten Rohrraums 32 steiler ist. Dadurch können gute Strömungsbedingungen des Wasserstoff-Wasserdampf-Gemisches erzielt werden, insbesondere eine turbulente Strömung, jedoch keine zu hohen Strömungsgeschwindigkeiten.

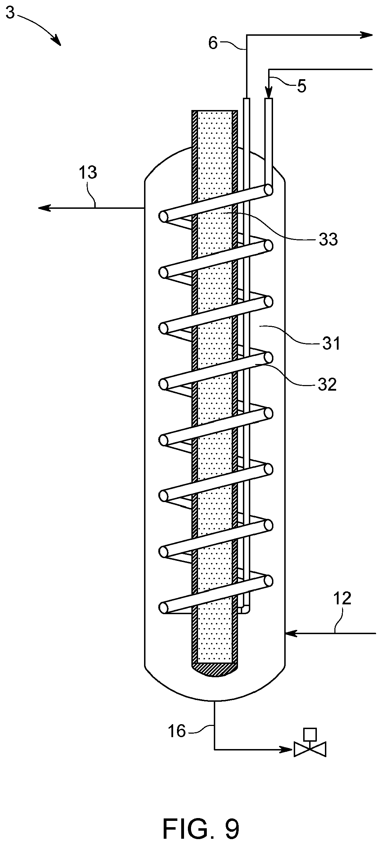

Fig. 9 zeigt schematisch eine fünfte Ausführungsform des ersten Wärmetauschers 3 in einer Schnittansicht. Diese Ausführungsform ist gleich ausgeführt wie die dritte Ausführungsform, bis darauf, dass ein Raum in der Mitte des ersten Rohrraums 3 von einer Einbaute 33 ausgefüllt wird. Die Einbaute 33 ist in dieser Ausführungsform ein Rohr, das mit einem Isolationsmaterial zumindest teilweise gefüllt ist. Die Einbaute 33 verringert das dem Wasserstoff-Wasserdampf-Gemisch zur Verfügung stehende Volumen im ersten Rohrraum 31, um die Strömungsbedingungen zu verbessern. Der wendelförmige zweite Rohrraum 32 verläuft teilweise um die Einbaute 33.

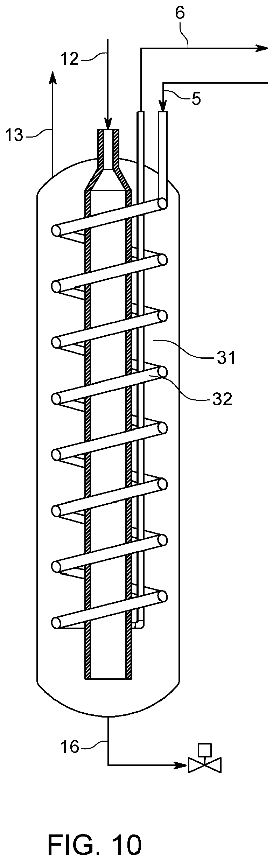

Fig. 10 zeigt schematisch eine sechste Ausführungsform des ersten Wärmetauschers 3 in einer Schnittansicht. Diese Ausführungsform ist gleich ausgeführt wie die dritte Ausführungsform, bis darauf, dass der Einlass 12 für das Wasserstoff-Wasserdampf-Gemisch zu einem Rohr führt, das innerhalb des ersten Rohrraums 31 verläuft und gegenüber diesem isoliert ist, wobei der wendelförmige zweite Rohrraum 32 teilweise um dieses Rohr verläuft. Das Rohr wird also zur Zuführung zum ersten Rohrraum 31 verwendet.

## Patentansprüche

1. Verfahren zur Trocknung eines Wasserstoff-Wasserdampf-Gemisches mit zumindest den folgenden Schritten:
a) Vorsehen eines Wasserstoff-Wasserdampf-Gemisches mit einem Wasserdampfanteil;
b) Vorsehen eines ersten Wärmetauschers (3) und eines zweiten Wärmetauschers (4) jeweils zur Wärmeübertragung zwischen dem Wasserstoff-Wasserdampf-Gemisch und einem Kältefluid;
c) Zuleiten des Wasserstoff-Wasserdampf-Gemisches zum ersten Wärmetauscher (3), wobei das Kältefluid mit einer Temperatur von kleiner oder gleich 0°C zum ersten Wärmetauscher (3) zugeleitet wird, zur Abscheidung von Wasserdampf aus dem Wasserstoff-Wasserdampf-Gemisch; und Austragen des Wasserstoff-Wasserdampf-Gemisches aus dem ersten Wärmetauscher (3);
d) Zuleiten des Wasserstoff-Wasserdampf-Gemisches zum ersten Wärmetauscher (3), wobei die Zuleitung des Kältefluids zum ersten Wärmetauscher (3) reduziert oder unterbrochen wird, zum Regenerieren des ersten Wärmetauschers (3), insbesondere zum Abtauen von Schnee und/oder Eis im ersten Wärmetauscher (3); und Austragen des Wasserstoff-Wasserdampf-Gemisches aus dem ersten Wärmetauscher (3) und Zuleiten des aus dem ersten Wärmetauscher (3) ausgetragenen Wasserstoff-Wasserdampf-Gemisches zum zweiten Wärmetauscher (4), wobei das Kältefluid mit einer Temperatur von kleiner oder gleich 0°C zum zweiten Wärmetauscher (4) zugeleitet wird, zur Abscheidung von Wasserdampf aus dem Wasserstoff-Wasserdampf-Gemisch; und Austragen des Wasserstoff-Wasserdampf-Gemisches aus dem zweiten Wärmetauscher (4).

2. Verfahren nach Anspruch 1, wobei Schritt c) weiter umfasst:
Zuleiten des Wasserstoff-Wasserdampf-Gemisches zum zweiten Wärmetauscher (4), wobei die Zuleitung des Kältefluids zum zweiten Wärmetauscher (4) reduziert oder unterbrochen wird, zum Regenerieren des zweiten Wärmetauschers (4), insbesondere zum Abtauen von Schnee und/oder Eis im zweiten Wärmetauscher (4); und Austragen des Wasserstoff-Wasserdampf-Gemisches aus dem zweiten Wärmetauscher (4), wobei das aus dem zweiten Wärmetauscher (4) ausgetragene Wasserstoff-Wasserdampf-Gemisch zum ersten Wärmetauscher (3) zugeleitet wird.

3. Verfahren nach einem der vorhergehenden Ansprüche, wobei der erste Wärmetauscher (3) einen Einlass (12) für das Wasserstoff-Wasserdampf-Gemisch und einen Auslass (13) für das Wasserstoff-Wasserdampf-Gemisch aufweist, und in Schritt c) das Wasserstoff-Wasserdampf-Gemisch über den Einlass (12) dem ersten Wärmetauscher (3) zugeleitet wird und über den Auslass (13) aus dem ersten Wärmetauscher (3) ausgetragen wird und in Schritt d) das Wasserstoff-Wasserdampf-Gemisch über den Auslass (13) dem ersten Wärmetauscher (3) zugeleitet wird und über den Einlass (12) aus dem ersten Wärmetauscher (3) ausgetragen wird, und wobei
vorzugsweise der zweite Wärmetauscher (4) einen Einlass (14) für das Wasserstoff-Wasserdampf-Gemisch und einen Auslass (15) für das Wasserstoff-Wasserdampf-Gemisch aufweist, und in Schritt d) das Wasserstoff-Wasserdampf-Gemisch über den Einlass (14) dem zweiten Wärmetauscher (4) zugeleitet wird und über den Auslass (15) aus dem zweiten Wärmetauscher (4) ausgetragen wird und in Schritt c) das Wasserstoff-Wasserdampf-Gemisch über den Auslass (15) dem zweiten Wärmetauscher (4) zugeleitet wird und über den Einlass (14) aus dem zweiten Wärmetauscher (4) ausgetragen wird.

4. Verfahren nach einem der vorhergehenden Ansprüche, weiter umfassend den Schritt:
e) Zuleiten des Wasserstoff-Wasserdampf-Gemisches zum ersten Wärmetauscher (3), wobei das Kältefluid mit einer Temperatur von kleiner oder gleich 0°C zum ersten Wärmetauscher (3) zugeleitet wird, zur Abscheidung von Wasserdampf aus dem Wasserstoff-Wasserdampf-Gemisch; und Austragen des Wasserstoff-Wasserdampf-Gemisches aus dem ersten Wärmetauscher (3); wobei das Wasserstoff-Wasserdampf-Gemisch vor dem Zuleiten des Wasserstoff-Wasserdampf-Gemisches zum ersten Wärmetauscher (3) nicht den zweiten Wärmetauscher (4) durchlaufen hat.

5. Verfahren nach einem der vorhergehenden Ansprüche, weiter umfassend den Schritt:
f) Zuleiten des Wasserstoff-Wasserdampf-Gemisches zum zweiten Wärmetauscher (4), wobei das Kältefluid mit einer Temperatur von kleiner oder gleich 0°C zum zweiten Wärmetauscher (4) zugeleitet wird, zur Abscheidung von Wasserdampf aus dem Wasserstoff-Wasserdampf-Gemisch; und Austragen des Wasserstoff-Wasserdampf-Gemisches aus dem zweiten Wärmetauscher (4); wobei das Wasserstoff-Wasserdampf-Gemisch vor dem Zuleiten des Wasserstoff-Wasserdampf-Gemisches zum zweiten Wärmetauscher (4) nicht den ersten Wärmetauscher (3) durchlaufen.

6. Verfahren nach einem der vorhergehenden Ansprüche, wobei die Schritte in der folgenden Reihenfolge durchgeführt werden: vorzugsweise Schritt e), Schritt d), vorzugsweise Schritt f), Schritt c);
wobei vorzugsweise die Schritte in dieser Reihenfolge wiederholt durchgeführt werden.

7. Verfahren nach einem der vorhergehenden Ansprüche, wobei in Schritt c) oder e) ein Taupunkt des Wasserstoff-Wasserdampf-Gemisches im ersten Wärmetauscher (3) und/oder nach dem Austragen aus dem ersten Wärmetauscher (3) gemessen wird und wobei der Schritt d) oder f) durchgeführt wird basierend auf einer Feststellung, dass der gemessene Taupunkt einen vorbestimmten Taupunktgrenzwert übersteigt und wobei
vorzugsweise in Schritt d) oder f) ein Taupunkt des Wasserstoff-Wasserdampf-Gemisches im zweiten Wärmetauscher (4) und/oder nach dem Austragen aus dem zweiten Wärmetauscher (4) gemessen wird und wobei der Schritt c) oder e) durchgeführt wird basierend auf einer Feststellung, dass der gemessene Taupunkt einen vorbestimmten Grenzwert übersteigt.

8. Verfahren nach einem der vorhergehenden Ansprüche,
wobei in Schritt d) eine Temperatur des Wasserstoff-Wasserdampf-Gemisches im ersten Wärmetauscher (3) und/oder nach dem Austragen aus dem ersten Wärmetauscher (3) gemessen wird und wobei basierend auf einer Feststellung, dass die gemessene Temperatur einen vorbestimmten Temperaturgrenzwert übersteigt:
- ein Wasserauslassventil (16) des ersten Wärmetauschers (3) zum Abscheiden kondensierten Wassers für ein vorbestimmtes Zeitintervall geöffnet wird, wobei vorzugsweise ein Einlass (12) und/oder ein Auslass (13) für das Wasserstoff-Wasserdampf-Gemisch des ersten Wärmetauschers (3) verschlossen werden, und
- der Schritt c) oder f) durchgeführt wird.

9. Verfahren zur Herstellung von Wasserstoff, wobei ein Wasserstoff-Wasserdampf-Gemisch mit einem Wasserdampfanteil mittels Elektrolyse eines Wasser enthaltenden Ausgangsstoffs hergestellt wird und mit diesem Wasserstoff-Wasserdampf-Gemisch das Verfahren zur Trocknung eines Wasserstoff-Wasserdampf-Gemisches nach einem der Ansprüche 1 bis 8 durchgeführt wird.

10. Wasserstofftrocknungsvorrichtung (1) aufweisend:
- eine Zufuhr (2) für ein Wasserstoff-Wasserdampf-Gemisch enthaltend einen Wasserdampfanteil;
- einen ersten Wärmetauscher (3) zur Wärmeübertragung zwischen dem Wasserstoff-Wasserdampf-Gemisch und einem Kältefluid, mit einer Zuleitung (5) für das Kältefluid und einer Ableitung (6) für das Kältefluid;
- einen zweiten Wärmetauscher (4) zur Wärmeübertragung zwischen dem Wasserstoff-Wasserdampf-Gemisch und dem Kältefluid, mit einer Zuleitung (7) für das Kältefluid und einer Ableitung (8) für das Kältefluid;
- eine Kühlvorrichtung (9), die dazu eingerichtet ist, das Kältefluid auf eine Temperatur von kleiner oder gleich 0°C, bevorzugt zwischen -40°C und -10°C, besonders bevorzugt zwischen - 30°C und -20°C, zu kühlen und die Zuleitung (5) des ersten Wärmetauschers (3) und die Zuleitung (7) des zweiten Wärmetauschers (4) mit dem Kältefluid zur Abscheidung von Wasserdampf aus dem Wasserstoff-Wasserdampf-Gemisch im jeweiligen Wärmetauscher (3, 4) zu versorgen;
- eine Ventil- und Leitungsanordnung (10), die dazu eingerichtet ist:
- in einem Abscheidebetrieb des ersten Wärmetauschers (3) und einem Regenerationsbetrieb des zweiten Wärmetauschers (4) das Wasserstoff-Wasserdampf-Gemisch von der Zufuhr (2) dem zweiten Wärmetauscher (4) zuzuleiten und vom zweiten Wärmetauscher (4) dem ersten Wärmetauscher (3) zuzuleiten und
- in einem Regenerationsbetrieb des ersten Wärmetauschers (3) und einem Abscheidebetrieb des zweiten Wärmetauschers (4) das Wasserstoff-Wasserdampf-Gemisch von der Zufuhr (2) dem ersten Wärmetauscher (3) zuzuleiten und vom ersten Wärmetauscher (3) dem zweiten Wärmetauscher (4) zuzuleiten.

11. Wasserstofftrocknungsvorrichtung (1) nach Anspruch 10, aufweisend eine Kontrolleinheit (11), die die Ventil- und Leitungsanordnung (10) steuern kann und die dazu eingerichtet ist, die Wasserstofftrocknungsvorrichtung (1) zur Durchführung des Verfahrens nach einem der Ansprüche 1 bis 9 zu steuern.

12. Wasserstofftrocknungsvorrichtung (1) nach einem der Ansprüche 10 oder 11, wobei der erste Wärmetauscher (3) und der zweite Wärmetauscher (4) jeweils einen Einlass (12, 14) für das Wasserstoff-Wasserdampf-Gemisch und einen Auslass (13, 15) für das Wasserstoff-Wasserdampf-Gemisch aufweisend und die Ventil- und Leitungsanordnung (10) dazu eingerichtet ist:
- im Abscheidebetrieb des ersten Wärmetauschers (3) und Regenerationsbetrieb des zweiten Wärmetauschers (4) das Wasserstoff-Wasserdampf-Gemisch von der Zufuhr (2) dem Auslass (15) des zweiten Wärmetauschers (4) zuzuleiten und von dem Einlass (14) des zweiten Wärmetauschers (4) dem Einlass (12) des ersten Wärmetauschers (3) zuzuleiten und
- im Regenerationsbetrieb des ersten Wärmetauschers (3) und Abscheidebetrieb des zweiten Wärmetauschers (4) das Wasserstoff-Wasserdampf-Gemisch von der Zufuhr (2) dem Auslass (13) des ersten Wärmetauschers (3) zuzuleiten und vom Einlass (12) des ersten Wärmetauschers (3) dem Einlass (14) des zweiten Wärmetauschers (4) zuzuleiten.

13. Wasserstofftrocknungsvorrichtung (1) nach einem der Ansprüche 10 bis 12, wobei ein Einlass (12) für das Wasserstoff-Wasserdampf-Gemisch des ersten Wärmetauschers (3) und ein Einlass (14) für das Wasserstoff-Wasserdampf-Gemisch des zweiten Wärmetauschers (4) über die Ventil- und Leitungsanordnung (10) miteinander verbunden oder verbindbar sind.

14. Wasserstofftrocknungsvorrichtung (1) nach einem der Ansprüche 10 bis 13, wobei der erste Wärmetauscher (3) und der zweite Wärmetauscher (4) jeweils zur Wärmeübertragung zwischen dem Wasserstoff-Wasserdampf-Gemisch und dem Kältefluid ist, wobei der erste Wärmetauscher (3) und der zweite Wärmetauscher (4) jeweils einen ersten Rohrraum (31) für das Wasserstoff-Wasserdampf-Gemisch und einen zweiten Rohrraum (32) für das Kältefluid aufweisen.

15. Wasserstofftrocknungsvorrichtung (1) nach Anspruch 14, wobei der zweite Rohrraum (32) zumindest teilweise innerhalb des ersten Rohrraums (31) wendelförmig verläuft.
